(19) **Europäisches Patentamt / European Patent Office / Office européen des brevets**

(11) **EP 2 858 031 A1**

(12) **EUROPEAN PATENT APPLICATION**

(43) Date of publication:
08.04.2015 Bulletin 2015/15

(51) Int Cl.:
*G06T 1/60* (2006.01)

(21) Application number: 14187446.1

(22) Date of filing: 02.10.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 04.10.2013 JP 2013209391

(71) Applicant: FUJITSU LIMITED
Kawasaki-shi,
Kanagawa 211-8588 (JP)

(72) Inventors:
• **Kobashi, Hiromichi**
**Hayes, Middlesex UB4 8FE (GB)**
• **Tsuchimoto, Yuichi**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **Program, apparatus, and method for data management**

(57) When a relationship between a first data item belonging to a first group and a second data item belonging to a second group is detected, an operation unit updates the coordinates of the first data item using the coordinates of the second group and updates the coordinates of the second data item using the coordinates of the first group. The operation unit then determines which data items are to belong to each of the first and second groups, on the basis of the coordinates of the data items belonging to the first and second groups and the coordinates of the first and second groups.

FIG. 1

**Description**

FIELD

The embodiments discussed herein relate to a program, apparatus, and method for data management.

BACKGROUND

At present, a variety of devices capable of storing data are used. In these devices, a mechanism to accelerate data access may be employed. For example, a memory capable of providing relatively fast access, called a cache, may be provided for a storage device. For example, data that is not yet requested is prefetched from a storage device and stored in a cache. Then, when the data is requested, the data is read and transferred from the cache to a requesting source, thereby achieving a fast data response.

By the way, in an information processing system, there are processes that are performed based on relationships among data items. For example, for determining where to display document data items (text, drawings, tables, etc.) included in a document on a display, there is proposed a method of arranging document data items having a reference relationship close to each other. In addition, there is also proposed a method of analyzing keywords included in each of a plurality of documents and extracting a combination of documents that belong to the same category on the basis of the word vectors represented by the documents.

Please see, for example, Japanese Laid-open Patent Publications Nos. 08-95962 and 2009-3888.

Now consider an idea of grouping data items related to each other and prefetching data items on a group-by-group basis. For example, a plurality of data items that are likely to be accessed successively is grouped, and when any of the data items is accessed, the group to which the data item belongs is prefetched. This increases the possibility (hit rate) that data items to be subsequently requested have already been prefetched. However, this idea has a problem of how to manage relationships among the data items.

For example, there is considered a method of grouping data items that were accessed successively with higher frequency into the same group with reference to an access history of previous access to data items. This is because such data items are expected to be likely accessed successively again in the future. In this case, statistically speaking, the more information the access history has, the more reliable grouping is achieved. However, if all the access history is stored, the information amount of the access history increases with time, thereby using more memory. On the other hand, if the access history only for a certain time period is stored, the information for the other time period is dropped from the access history, thereby degrading the accuracy of the grouping.

SUMMARY

According to one aspect, the present invention intends to provide a data management program, apparatus, and method capable of improving the accuracy of the grouping.

According to one aspect, there is provided a computer program that manages a plurality of data items by grouping the plurality of data items into a plurality of groups and by giving coordinates to each of the plurality of data items and each of the plurality of groups, the coordinates indicating relationships between the each of the plurality of data items and the each of the plurality of groups, and that causes a computer to perform a process including: updating, upon detecting a relationship between a first data item belonging to a first group and a second data item belonging to a second group, the coordinates of the first data item using the coordinates of the second group and the coordinates of the second data item using the coordinates of the first group with reference to information about the coordinates associated with the plurality of data items and the coordinates associated with the plurality of groups; and determining which data items are to belong to each of the first and second groups, based on the coordinates of data items belonging to the first and second groups and the coordinates of the first and second groups.

BRIEF DESCRIPTION OF DRAWINGS

FIG. 1 illustrates a data management apparatus according to a first embodiment;
FIG. 2 illustrates an information processing system according to a second embodiment;
FIG. 3 illustrates an example of a hardware configuration of a server according to the second embodiment;
FIG. 4 illustrates an example of functions of a server according to the second embodiment;
FIG. 5 illustrates an example of segments according to the second embodiment;
FIG. 6 illustrates an example of a segment management table according to the second embodiment;

FIG. 7 illustrates an example of a data management table according to the second embodiment;

FIG. 8 illustrates an example of a membership table according to the second embodiment;

FIG. 9 illustrates an example of grouping according to the second embodiment;

FIG. 10 is a flowchart illustrating an example of an access process according to the second embodiment;

FIG. 11 is a flowchart illustrating an example of relationship update according to the second embodiment;

FIG. 12 illustrates an example of distances between data items and segments according to the second embodiment;

FIG. 13 illustrates an example of how to calculate the sum of distances according to the second embodiment;

FIG. 14 illustrates an example of updated grouping according to the second embodiment;

FIG. 15 is a flowchart illustrating an example of segment update according to the second embodiment;

FIG. 16 illustrates another example of distances between data items and segments according to the second embodiment;

FIG. 17 illustrates another example of a coordinate system according to the second embodiment;

FIG. 18 illustrates an example of an access history;

FIGS. 19A and 19B illustrate examples of grouping based on access histories;

FIG. 20 is a flowchart illustrating an example of relationship update according to a third embodiment;

FIG. 21 illustrates an example of inner products according to the third embodiment;

FIG. 22 illustrates an example of a result of sorting inner products according to the third embodiment;

FIG. 23 illustrates an example of a data management table according to a fourth embodiment;

FIG. 24 is a flowchart illustrating an example of relationship update according to the fourth embodiment;

FIGS. 25A and 25B illustrate an example of management information from immediately after update according to the fourth embodiment;

FIG. 26 illustrates an example of updated grouping according to the fourth embodiment;

FIG. 27 illustrates an example of an information processing system according to a fifth embodiment; and

FIG. 28 illustrates an example of a segment location table according to the fifth embodiment.

DESCRIPTION OF EMBODIMENTS

Several embodiments will be described below with reference to the accompanying drawings, wherein like reference numerals refer to like elements throughout.

(First Embodiment)

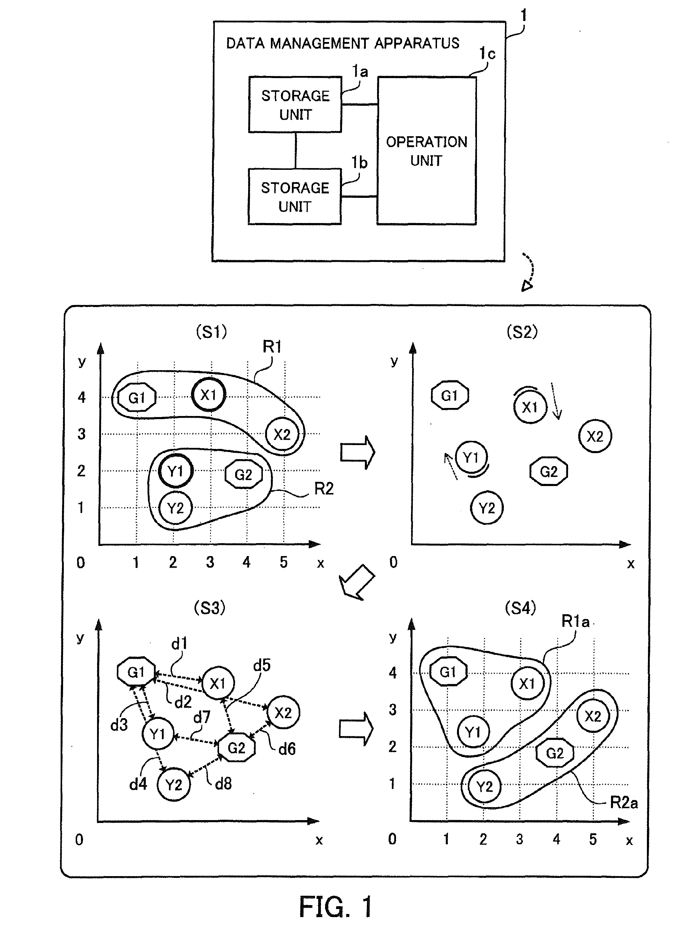

FIG. 1 illustrates a data management apparatus according to a first embodiment. A data management apparatus 1 stores various types of data items. The data management apparatus 1 receives an access request for a data item from another apparatus (not illustrated) connected over a network. The access request is, for example, a data read request. The data management apparatus 1 provides the requesting apparatus with the requested data item.

Software running on the data management apparatus 1 may generate an access request. In this case, the data management apparatus 1 provides the software with the requested data item. The data management apparatus 1 may be a computer or a storage device that stores data items. The data management apparatus 1 includes storage units 1a and 1b and an operation unit 1c.

The storage units 1a and 1b store data items. The storage unit 1a is able to provide faster random access than the storage unit 1b. The storage unit 1a is used as a cache for temporarily storing data items stored in the storage unit 1b. For example, the storage unit 1a may be a volatile storage medium, such as a Random Access Memory (RAM), etc., or may be a non-volatile storage medium, such as a Solid State Drive (SSD), etc. For example, the storage unit 1b may be a non-volatile storage medium. For example, if a RAM is used as the storage unit 1a, a Hard Disk Drive (HDD), an SSD, an optical disc, a magnetic tape, or the like may be used as the storage unit 1b. On the other hand, if an SSD is used as the storage unit 1a, an HDD, an optical disc, a magnetic tape, or the like may be used as the storage unit 1b.

The operation unit 1c may be a Central Processing Unit (CPU), a Digital Signal Processor (DSP), an Application Specific Integrated Circuit (ASIC), a Field Programmable Gate Array (FPGA), or another. The operation unit 1c may be a processor that executes programs. The "processor" here may be a set of a plurality of processors (multiprocessor).

The operation unit 1c receives an access request for a data item. If the requested data item is stored in the storage unit 1a (cache hit), the operation unit 1c accesses the storage unit 1a. If the requested data item is not stored in the storage unit 1a (cache miss), then the operation unit 1c accesses the storage unit 1b. Readout of a requested data item through a cache hit is faster than that through a cache miss. Therefore, an improvement in cache hit rate leads to achieving faster data access.

The operation unit 1c manages a plurality of data items stored in the storage unit 1b by dividing the plurality of data items into a plurality of groups. This is because a technique of grouping data items having a relationship with each other and prefetching the data items on a group-by-group basis improves the cache hit rate. The "relationship" between data items is that, when a certain data item is accessed, there is the possibility that the other data items will be accessed in the future (for example, within a predetermined time period). For example, data items that are likely to be accessed successively may be regarded as having a relationship among them.

The operation unit 1c manages relationships among data items using coordinates (for example, two-dimensional or three-dimensional coordinates) given to individual data items and individual groups. It may be said that the coordinates are information indicating the positions of the individual data items and the positions of the individual groups in a predetermined dimensional space. For example, the storage unit 1b stores data items X1, X2, Y1, and Y2. Assume now that a combination of the data items X1 and X2 is treated as a group G1 and a combination of the data items Y1 and Y2 is treated as a group G2. In this example, it is also assumed that each group is made up of two data items (the number of data items is not limited). FIG. 1 exemplifies a two-dimensional coordinate system where the x axis and y axis are perpendicular. A region R1 is a region that surrounds the data items X1 and X2 belonging to the group G1. A region R2 is a region that surrounds the data items Y1 and Y2 belonging to the group G2.

The storage unit 1a stores information about the coordinates respectively associated with the data items X1, X2, Y1, and Y2. The storage unit 1a also stores information about the coordinates respectively associated with the groups G1 and G2. The information about the coordinates of the groups G1 and G2 is previously stored in the storage unit 1a. The coordinates to be given to the groups G1 and G2 may be determined under prescribed rules. For example, on the two-dimensional coordinate plane, the coordinates of grid points at a predetermined interval may be given to groups in order, according to the Z-ordering or another scheme. Predetermined initial values are previously given as the coordinates of each data item X1, X2, Y1, and Y2. The coordinates of each group are fixed, whereas the coordinates of each data item may be updated according to access to the data item.

The operation unit 1c detects a relationship between the data item X1 belonging to the group G1 and the data item Y1 belonging to the group G2 (step S1). For example, when receiving an access request for the data item Y1 next to an access request for the data item X1, the operation unit 1c may detect such a relationship that these data items X1 and Y1 are accessed successively.

Then, the operation unit 1c updates the coordinates of the data item X1 using the coordinates of the group G2 with reference to the storage unit 1a. The operation unit 1c also updates the coordinates of the data item Y1 using the coordinates of the group G1 (step S2). More specifically, the operation unit 1c updates the coordinates of the data item X1 to be closer to the coordinates of the group G2. The operation unit 1c also updates the coordinates of the data item Y1 to be closer to the coordinates of the group G1.

In this connection, a distance between the coordinates of a data item and the coordinates of a group is regarded as representing the strength of a relationship between the data item and another data item belonging to the group. For example, if the coordinates of the data item X1 are updated to be closer to the coordinates of the group G2, this means that the relationship between the data item X1 and the data item Y1 belonging to the group G2 becomes stronger (for example, the possibility that these data items are accessed successively increases). Similarly, if the coordinates of the data item Y1 are updated to be closer to the coordinates of the group G1, this means that the relationship between the data item Y1 and the data item X1 belonging to the group G1 becomes stronger. That is to say, in this case, the relationship between the data items X1 and Y1 becomes stronger with each other.

The operation unit 1c determines which data items are to belong to each of the groups G1 and G2, on the basis of the coordinates of the data items X1, X2, Y1, and Y2 belonging to the groups G1 and G2 and the coordinates of the groups G1 and G2 (step S3).

For example, the operation unit 1c determines which data items are to belong to each of the groups G1 and G2, on the basis of the distances between the coordinates of the data items X1, X2, Y1, and Y2 and the coordinates of the groups G1 and G2. A distance d1 is the distance between the coordinates of the data item X1 and the coordinates of the group G1. A distance d2 is the distance between the coordinates of the data item X2 and the coordinates of the group G1. A distance d3 is the distance between the coordinates of the data item Y1 and the coordinates of the group G1. A distance d4 is the distance between the coordinates of the data item Y2 and the coordinates of the group G1. A distance d5 is the distance between the coordinates of the data item X1 and the coordinates of the group G2. A distance d6 is the distance between the coordinates of the data item X2 and the coordinates of the group G2. A distance d7 is the distance between the coordinates of the data item Y1 and the coordinates of the group G2. A distance d8 is the distance between the coordinates of the data item Y2 and the coordinates of the group G2.

For example, the operation unit 1c divides the data items into groups in such a way that the sum DS (=DS1 + DS2) of the sum DS1 of the distances between the coordinates of individual data items that belong to the group G1 and the coordinates of the group G1 and the sum DS2 of the distances between the coordinates of individual data items that belong to the group G2 and the coordinates of the group G2 is the minimum. This is because a group of data items that have smaller distances to the coordinates of the group has a stronger relationship between the data items (for example, a higher possibility that they are accessed successively).

Considering the above exemplified distances d1 to d8, there are six candidates for the sum DS (possible grouping combinations). Among them, DS1 = d1 + d3 and DS2 = d6 + d8 provide the minimum sum. Therefore, the operation unit 1c determines to cause the data items X1 and Y1 to belong to the group G1 and to cause the data items X2 and Y2 to belong to the group G2 (step S4). Alternatively, for example, the operation unit 1c may select one of the groups G1 and G2 using a round-robin algorithm and sequentially cause data items to belong to the selected group in order from the closest to the coordinates of the selected group. A region R1a is a region that surrounds the data items X1 and Y1 now belonging to the group G1. A region R2a is a region that surrounds the data items X2 and Y2 now belonging to the group G2.

Alternatively, the operation unit 1c may determine which data items are to belong to each of the groups G1 and G2, using the inner products of the vectors (position vectors) represented by the coordinates of the data items X1, X2, Y1, and Y2 and the vector represented by the coordinates of the groups G1 and G2. For example, the operation unit 1c calculates, for each data item, the inner product of the vector directed from the coordinates of the group G1 to the coordinates of the group G2 and the vector represented by the coordinates of the data item. By comparing the calculated inner products with each other, the operation unit 1c is able to easily determine, for each data item, the coordinates of which group are relatively closer to the coordinates of the data item. In this case, by soring the inner products in ascending order, the operation unit 1c causes two data items having relatively small inner products to belong to the group G1 and causes two data items having relatively large inner products to belong to the group G2. In this way, it is possible to determine to cause the data items X1 and Y1 to belong to the group G1 and to cause the data items X2 and Y2 to belong to the group G2. This technique has a lower computational cost than the case of performing calculation directly using the distances d1 to d8.

After that, the operation unit 1c is able to prefetch data items on an updated group G1 and G2 basis from the storage unit 1b to the storage unit 1a. For example, a storage space for the data item X1 may have been released from the storage unit 1a when the data item X1 belonging to the group G1 is accessed afterwards. In this case, the operation unit 1c obtains the data items X1 and Y1 belonging to the group G1 from the storage unit 1b and stores them in the storage unit 1a. For example, in the case where it is determined that these data items X1 and Y1 are to belong to the group G1 because the relationship for successive access thereto was detected, there is a high possibility that the data Y1 will be accessed next, thereby improving the cache hit rate for the next access.

In the data management apparatus 1, the operation unit 1c detects a relationship between the data item X1 belonging to the group G1 and the data item Y1 belonging to the group G2. The operation unit 1c updates the coordinates of the data item X1 using the coordinates of the group G2, and updates the coordinates of the data item Y1 using the coordinates of the group G1. The operation unit 1c determines which data items are to belong to each of the groups G1 and G2, on the basis of the coordinates of the data items X1, X2, Y1, and Y2 belonging to the groups G1 and G2 and the coordinates of the groups G1 and G2.

The above technique improves the accuracy of the grouping. Now consider an idea of grouping data items that were accessed successively with higher frequency into the same group with reference to an access history of previous access to data items at the time of grouping. Statistically speaking, the more information the access history used for the grouping has, the more reliable grouping is achieved. However, if all the access history is stored, the information amount of the access history increases with time, thereby using more memory. To save the amount of memory used, one of considered ideas is to store the access history only for a predetermined time period. In this idea, however, the information for the other time period is dropped from the access history, thereby degrading the accuracy of the grouping.

By contrast, the data management apparatus 1 manages relationships among data items using the coordinates of the data items. Then, each time a relationship between data items is detected, the data management apparatus 1 updates the coordinates of the data items whose relationship was detected, so as to record that these data items have a stronger relationship. Therefore, there is no need to hold any access history of access to the data items. This is because the coordinates of each data item at a certain time point are information that reflects the access history of previous access prior to the time point.

In this embodiment, the data management apparatus 1 may just keep a memory space for storing the coordinates of the individual data items. This minimizes an increase in the amount of memory used (for example, storage unit 1a) as compared with the case of storing all the access history. In addition, it is possible to reflect all the access history of previous access on the coordinates of the data items, so as to improve the accuracy of the grouping as compared with the case of storing the access history only for a certain time period.

In addition, the relationship between data items is updated at the time it is detected, and therefore there is no need to process a large amount of information at a time, unlike the case of analyzing all the access history. This minimizes an increase in the workload of the data management apparatus 1 for analyzing the relationship between the data items. As described above, it is possible to efficiently manage relationships among data items using the coordinates of the data items.

(Second Embodiment)

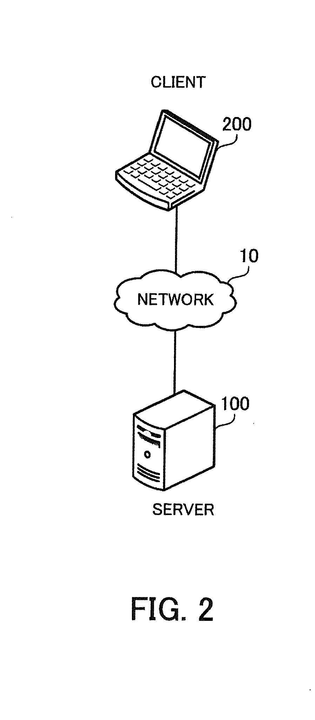

FIG. 2 illustrates an information processing system according to a second embodiment. An information processing system of the second embodiment includes a server 100 and a client 200. The server 100 and the client 200 are connected to a network 10. The network 10 may be a Local Area Network (LAN) or may be a Wide Area Network (WAN), the Internet, or the like.

The server 100 is a server computer that stores various types of data items. The server 100 receives an access request for a data item from the client 200. The access request is a data read request. For example, the server 100 returns the requested data item to the client 200. The server 100 may receive an access request for a data item from software running on the server 100. In this case, the server 100 returns the requested data item to the software.

The server 100 manages data items by grouping data items that are likely to be accessed successively into the same group. When receiving an access request for a data item, the server 100 stores the group to which the requested data item belongs (that is, all the data items belonging to the group) in a cache. This is an attempt to improve a cache hit rate for access requests for data items that are not yet requested to be accessed. In this connection, the server 100 is one example of the data management apparatus 1 of the first embodiment.

The client 200 is a client computer that is used by a user. For example, the client 200 sends the server 100 an access request for a prescribed data item to be used in its operation. In addition, the user is able to operate the client 200 to send an access request for a desired data item to the server 100. The user may directly operate the server 100 to enter an access request for a desired data item in the server 100.

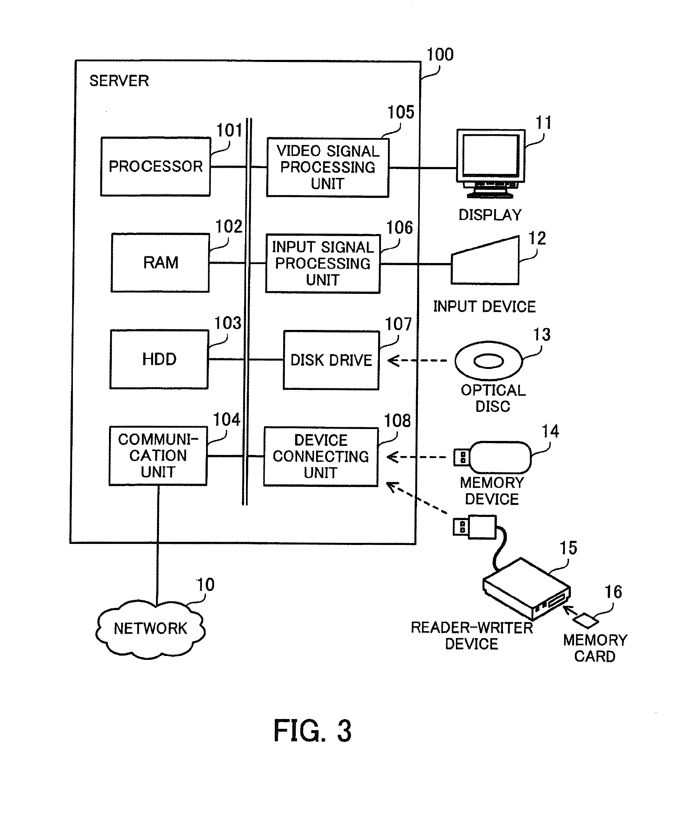

FIG. 3 illustrates an example of a hardware configuration of a server according to the second embodiment. The server 100 includes a processor 101, a RAM 102, an HDD 103, a communication unit 104, a video signal processing unit 105, an input signal processing unit 106, a disk drive 107, and a device connecting unit 108. Each unit is connected to a bus of the server 100. In this connection, the server 200 may have the same hardware configuration as the server 100.

The processor 101 controls information processing that is performed by the server 100. The processor 101 may be, for example, a CPU, a DSP, an ASIC, an FPGA, or another. The processor 101 may be a multiprocessor. Furthermore, the processor 101 may be a combination of two or more units selected from among a CPU, a DSP, an ASIC, an FPGA, and others.

The RAM 102 is a primary storage device of the server 100. The RAM 102 temporarily stores at least part of Operating System (OS) programs and application programs to be executed by the processor 101. The RAM 102 also stores various types of data to be used while the processor 101 operates.

The HDD 103 is a secondary storage device of the server 100. The HDD 103 magnetically writes and reads data on a built-in magnetic disk. The HDD 103 stores the OS programs, application programs, and various types of data. The server 100 may be provided with another kind of secondary storage device, such as a flash memory, a SSD, etc., or with a plurality of secondary storage devices.

The communication unit 104 is a communication interface that performs communications with other computers over the network 10. The communication unit 104 may be either a wired communication interface or a wireless communication interface.

The video signal processing unit 105 outputs images to a display 11 connected to the server 100 in accordance with instructions from the processor 101. As the display 11, a Cathode Ray Tube (CRT) display, a liquid crystal display, or another may be used.

The input signal processing unit 106 receives an input signal from an input device 12 connected to the server 100 and outputs the input signal to the processor 101. As the input device 12, for example, a pointing device, such as a mouse, a touch panel, etc., a keyboard, or another may be used.

The disk drive 107 is a driving device that reads programs and data from an optical disc 13 with laser beams or the like. As the optical disc 13, for example, a Digital Versatile Disc (DVD), a DVD-RAM, a Compact Disc Read Only Memory (CD-ROM), a CD-R (Recordable), a CD-RW (ReWritable), or another may be used. For example, the disk drive 107 reads programs and data from the optical disc 13 and stores them in the RAM 102 or the HDD 103 in accordance with instructions from the processor 101.

The device connecting unit 108 is a communication interface that allows peripherals to be connected to the server 100. For example, a memory device 14 and a reader-writer device 15 are connected to the device connecting unit 108. The memory device 14 is a storage medium provided with a function of communicating with the device connecting unit 108. The reader-writer device 15 reads and writes data on a memory card 16, which is a card-type storage medium. For example, the device connecting unit 108 stores programs and data read from the memory device 14 or the memory card 16 in the RAM 102 or the HDD 103 in accordance with instructions from the processor 101.

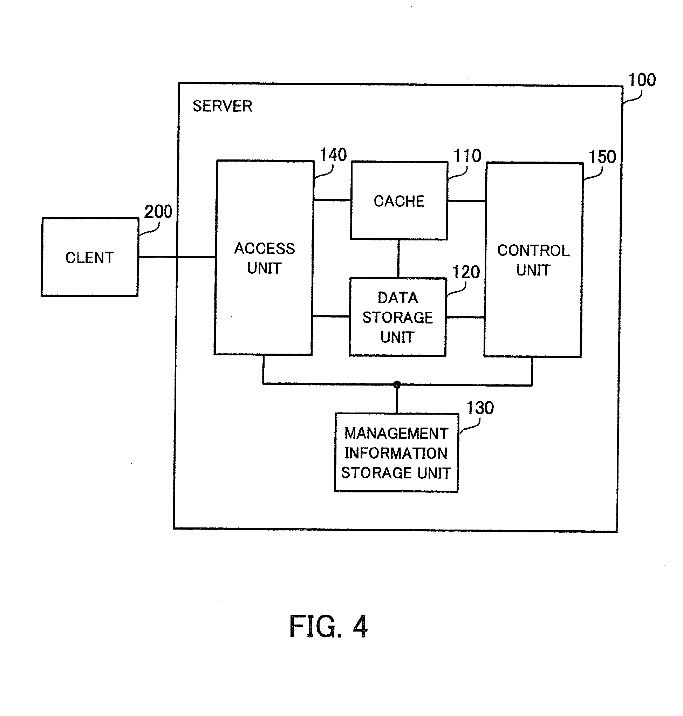

FIG. 4 illustrates an example of functions of a server according to the second embodiment. The server 100 includes a cache 110, a data storage unit 120, a management information storage unit 130, an access unit 140, and a control unit 150. The access unit 140 and the control unit 150 may be implemented as program modules to be executed by the processor 101.

The cache 110 may be implemented using a storage space prepared in the RAM 102. The data storage unit 120 may be implemented using a storage space prepared in the HDD 103. The management information storage unit 130 may be implemented using a storage space prepared in the RAM 102 or the HDD 103. The cache 110 is one example of the storage unit 1a of the first embodiment, and the data storage unit 120 is one example of the storage unit 1b of the first embodiment. In this connection, the data storage unit 120 may be implemented using a storage space of a storage device connected to the server 100 over the network 10 or using a storage space of a storage device externally provided to the server 100.

The cache 110 provides faster random access than the data storage unit 120. The cache 110 is used as a cache for the data storage unit 120, and temporarily stores data read from the data storage unit 120.

The data storage unit 120 stores various types of data items that are managed by the server 100. The data storage unit 120 stores one group in a continuous storage space. This is because sequential access to one group makes it possible to read the group faster. In the following description, such a continuous storage space for storing a group in the data storage unit 120 may be called a segment.

The management information storage unit 130 stores management information about data items that are managed by the server 100. The management information indicates relationships among the data items and which group each data item belongs to. The relationships among the data items are represented by coordinates given to the respective data items. In the second embodiment, a two-dimensional coordinate system is used by way of example. However, one-dimensional coordinate system or three- or higher dimensional coordinate system may be used.

The access unit 140 receives an access request for a data item from the client 200 or software (not illustrated) running on the server 100. The access unit 140 returns the requested data item to the requesting source (the client 200 or the software on the server 100). At this time, the access unit 140 notifies the control unit 150 of the successively accessed data items. In addition, the access unit 140 prefetches data items that are not yet requested to be accessed.

For example, if the access unit 140 receives an access request for a data item and fails to detect the requested data item in the cache 110 (cache miss), the access unit 140 obtains all the data items belonging to the group including the requested data item from the data storage unit 120 and stores them in the cache 110. In addition, the access unit 140 returns the requested data item to the requesting source. On the other hand, if the access unit 140 receives an access request for a data item and detects the requested data item in the cache 110 (cache hit), the access unit 140 reads the data item from the cache 110 and returns the data item to the requesting source. The access unit 140 recognizes correspondences between data items and groups with reference to the management information stored in the management information storage unit 130.

When receiving a notification about successively accessed data items from the access unit 140, the control unit 150 updates the management information stored in the management information storage unit 130. More specifically, the control unit 150 updates the coordinates of the successively accessed data items in such a way that the relationship therebetween becomes stronger. The control unit 150 determines which data items are to belong to each group, on the basis of the updated coordinates of the data items. Each time the access unit 140 receives successive access requests for data items, the control unit 150 updates the coordinates of the data items. In this way, each time data items to be successively accessed are detected, the relationship therebetween is updated.

The control unit 150 changes the arrangement of data items in a segment of the data storage unit 120 according to the determined grouping. More specifically, if there is a change in any group when a storage space (for example, a page) for the group is released from the cache 110, the control unit 150 changes the data arrangement in the segment corresponding to the group. In this connection, the data arrangement in a segment may be changed each time the data items belonging to the segment are changed.

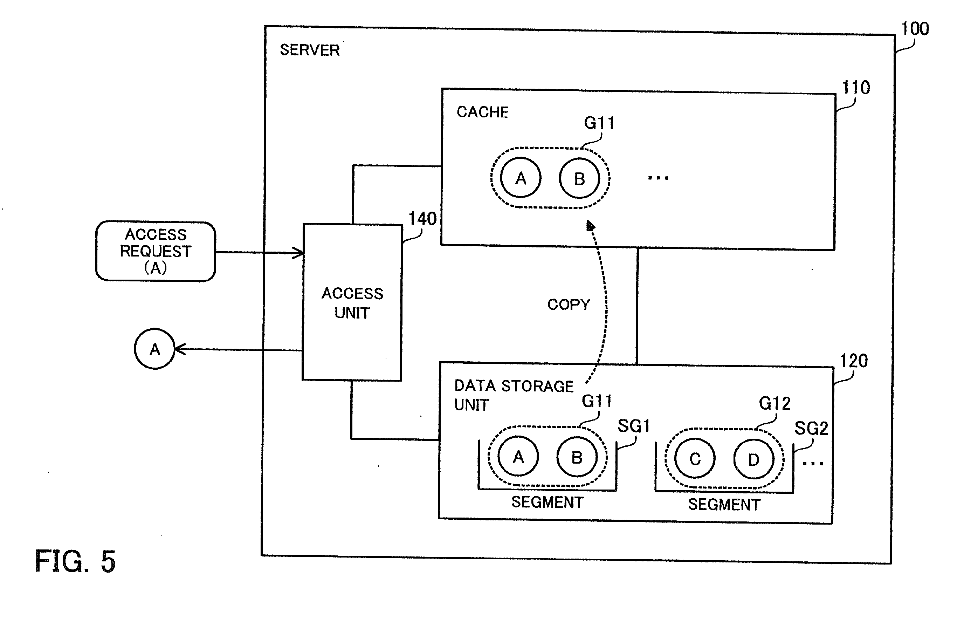

FIG. 5 illustrates an example of segments according to the second embodiment. The data storage unit 120 stores data items A, B, C, D, ... In addition, the data storage unit 120 has segments SG1, SG2, ... In this second embodiment, it is assumed that the number of data items (segment size) stored per segment is two. In this case, the number of data items that belong to one group is two. Alternatively, the segment size may be set to three or more (the segment size matches the number of data items per group).

The data items A and B belong to a group G11, and these data items A and B (group G11) are stored in the segment SG1. The data items C and D belong to a group G12, and these data items C and D (group G12) are stored in the segment SG2.

For example, the access unit 140 receives an access request for the data item A. If the data item A is not stored in the cache 110 immediately before the arrival of the access request, the access unit 140 copies the data items A and B stored in the segment SG1 of the data storage unit 120 and stores the copy in the cache 110. Then, the access unit 140 returns the data item A to the requesting source. This means that the access unit 140 prefetches the data B in association with the data item A. The access unit 140 may arrange the data items A and B in a continuous storage space of the cache 110. This is because even on the cache 110, sequential access to the data items A and B achieves fast successive access to the data items A and B.

In this second embodiment, a group and a segment have one-to-one correspondence. For example, the group G11 corresponds to the segment SG1 (the group G11 is arranged in the segment SG1). Similarly, the group G12 corresponds to the segment SG2 (the group G12 is arranged in the segment SG2).

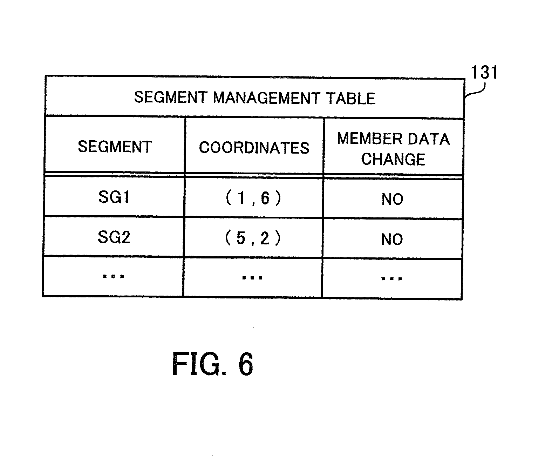

FIG. 6 illustrates an example of a segment management table according to the second embodiment. A segment management table 131 contains information indicating the coordinates associated with each segment. A segment and a group have one-to-one correspondence, and therefore it may be said that the coordinates associated with a segment are the coordinates associated with its corresponding group. The segment management table 131 is stored in the management information storage unit 130. The segment management table 131 has fields for segment, coordinates, and member data change.

The segment field contains the identification information of a segment. The coordinates field contains the coordinates associated with the segment (or group). The member data change field contains information indicating whether the data items belonging to the segment have been changed or not.

For example, the segment management table 131 has a record with a segment of "SG1", coordinates of "(1, 6)", and a member data change of "NO". This record indicates that two-dimensional coordinates of (1, 6) is associated with the segment SG1 (or group G11). This record also indicates the data items belonging to the segment SG1 have currently not been changed (if the data items have been changed, "YES" is indicated in the member data change field). In addition, the segment SG2 has coordinates of "(5, 2)".

The coordinates associated with each segment are previously instructed by a user to the sever 100. For example, each segment may be given coordinates on the two-dimensional coordinate plane under prescribed rules (for example, according to the Z-ordering using grid points at a predetermined interval on the two-dimensional coordinate plane). The Z-ordering is a scheme of selecting grid points on the coordinate plane in the order following the stroke order of the letter "Z". A lattice (arrangement of vertices for coordinates to be associated with segments) may be any one of a rectangular lattice, rhombic lattice, and equilateral triangular lattice. Instead of the Z-ordering, coordinates may be given to each segment according to another scheme. Alternatively, coordinates may randomly be given to each segment on the two-dimensional coordinate plane.

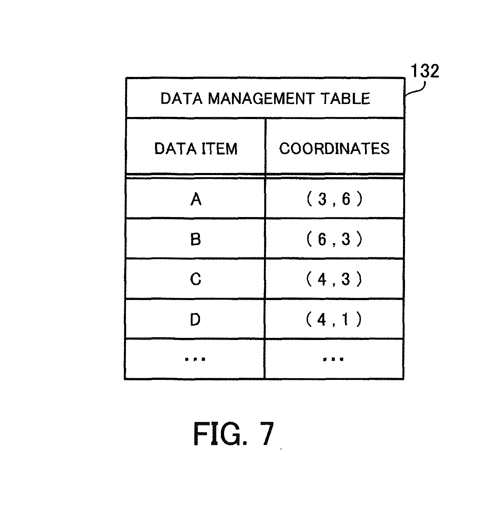

FIG. 7 illustrates an example of a data management table according to the second embodiment. A data management table 132 contains information about the coordinates associated with each data item. The data management table 132 is stored in the management information storage unit 130. The data management table 132 includes fields for data item and coordinates.

The data item field contains the identification information of a data item. The coordinates field contains the coordinates associated with the data item. For example, the data management table 132 has a record with a data item of "A" and coordinates of "(3, 6)". This record indicates that the two-dimensional coordinates of "(3, 6)" is associated with the data item A.

In addition, the data item B has the coordinates of "(6, 3)", the data item C has the coordinates of "(4, 3)", and the data item D has the coordinates of "(4, 1)".

In this connection, any initial values may be given as the coordinates of each data item registered in the data management table 132. For example, the initial values may be given as the coordinates of the data items, regularly or randomly.

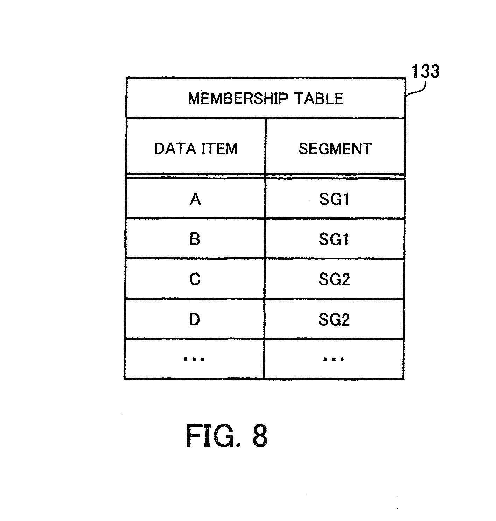

FIG. 8 illustrates an example of a membership table according to the second embodiment. A membership table 133 indicates correspondences between data items and segments (or groups). The membership table 133 is stored in the management information storage unit 130. The membership table 133 has fields for data item and segment.

The data item field contains the identification information of a data item. The segment field indicates a segment to which the data item belongs. In this connection, a segment and a group have one-to-one correspondence as described earlier, and therefore it may be said that the segment indicates a group to which the data item belongs.

For example, the membership table 133 has a record with a data item of "A" and a segment of "SG1". This record indicates that the data item A belongs to the segment SG1 (or the group G11).

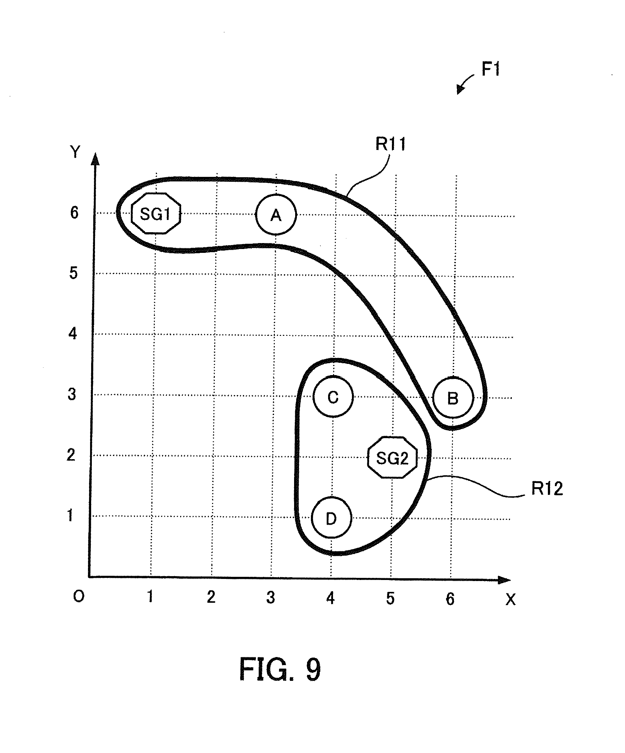

FIG. 9 illustrates an example of grouping according to the second embodiment. A coordinate system F1 represents a two-dimensional coordinate system where the x axis and y axis are perpendicular. In the coordinate system F1, the segments SG1 and SG2 and the data items A, B, C, and D are represented by coordinates that are exemplified in the segment management table 131 and the data management table 132.

A region R11 is a region that surrounds the data items A and B belonging to the segment SG1. It may be said that the region R11 corresponds to the group G11. A region R12 is a region that surrounds the data items C and D belonging to the segment SG2. It may be said that the region R12 corresponds to the group G12.

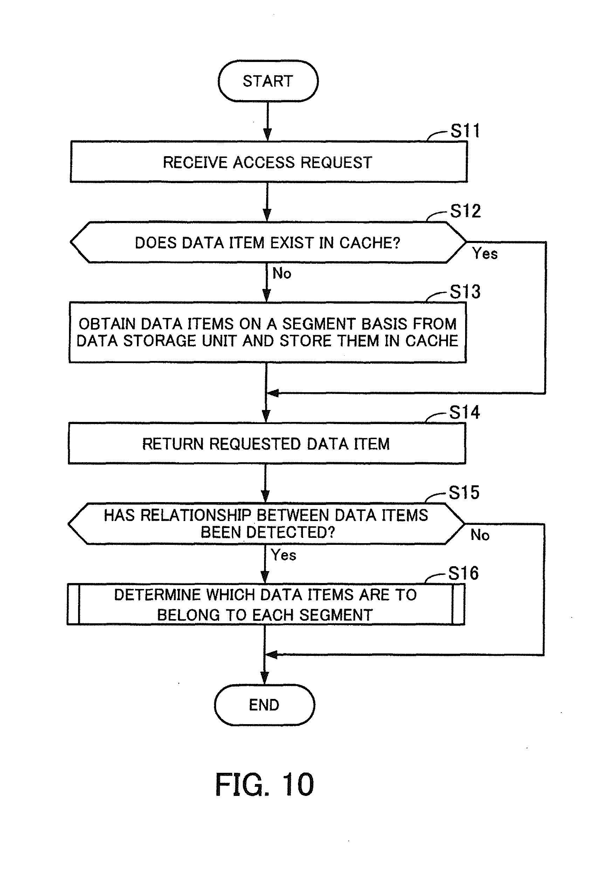

FIG. 10 is a flowchart illustrating an example of an access process according to the second embodiment. The process of FIG. 10 will be described step by step.

(S11) The access unit 140 receives an access request for a data item from the client 200.

(S12) The access unit 140 determines whether the requested data item exists in the cache 110 or not. If the data item exists, the access unit 140 obtains the requested data item from the cache 110, and then the process proceeds to step S14. If the data item does not exist, then the process proceeds to step S13. In this connection, each time a data item is stored in the cache 110, this data storage is recorded by the access unit 140, thereby making it possible to determine which data items are stored in the cache 110 and which storage space in the cache 110 the data items are stored. For example, the access unit 140 stores information indicating which data items exist in the cache 110, in the cache 110 or the management information storage unit 130, so that the access unit 140 is able to make the determination of step S12 with reference to the stored information.

(S13) The access unit 140 identifies a segment to which the requested data item belongs, with reference to the membership table 133. The access unit 140 obtains the data items included in the identified segment from the data storage unit 120. The access unit 140 copies and stores the obtained data items in the cache 110.

(S14) The access unit 140 returns the requested data item to the client 200.

(S15) The access unit 140 determines whether a relationship between data items has been detected or not. If a relationship has been detected, the process proceeds to step S16. If no relationship has been detected, the process is completed. More specifically, when two data items are accessed successively, the access unit 140 detects a "successive access" relationship between these data items.

(S16) The access unit 140 notifies the control unit 150 of the data items whose relationship has been detected for "successive access". The control unit 150 updates the relationship between the data items. The control unit 150 determines which data items are to belong to each segment, on the basis of the updated relationship between the data items. The control unit 150 merely determines which data items are to belong to each segment, but does not actually update the segments in the data storage unit 120.

In this connection, in step S15, the access unit 140 may set additional conditions for detecting a relationship between data items. For example, the access unit 140 may detect a relationship between two data items when the two data items are successively accessed by the same client 200 or the same user. For example, the client 200 may include the identification information of the client 200 or the identification information of the user in access requests, so as to enable the access unit 140 to recognize based on the information included in access requests whether the same client or the same user made the access requests.

Further, the access unit 140 may determine that the first access and the next access are successive accesses if the interval therebetween is less than a prescribed time period, and on the other hand, may not determine that the first access and the next access are successive accesses if the interval therebetween exceeds the predetermined time period.

Still further, the client 200 may include a data item accessed last time, in an access request. For example, in the case where the data item A was accessed last time and the data item C is accessed this time, the client 200 may include the identification information of the data item A in an access request for the data item C. In this time, in step S14, the access unit 140 is able to detect two successively accessed data items from the access request.

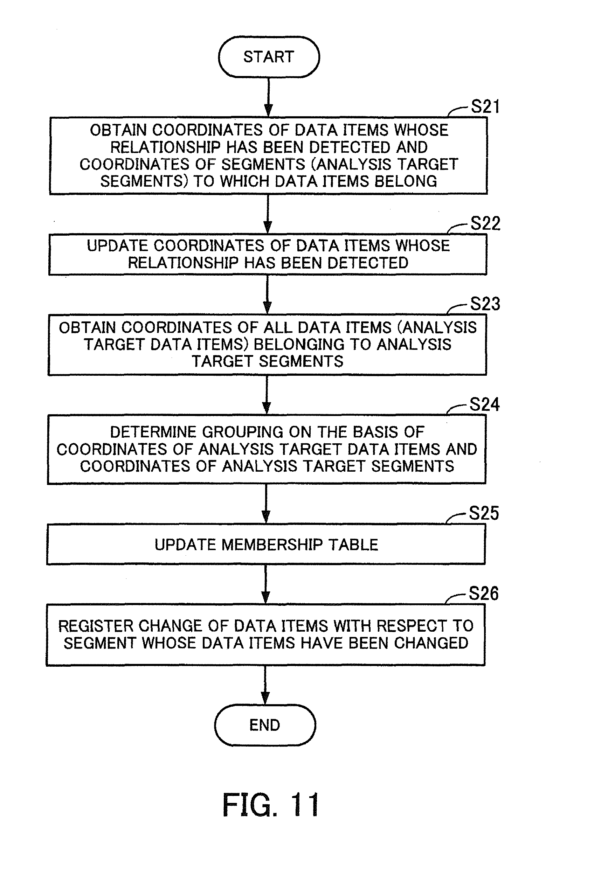

FIG. 11 is a flowchart illustrating an example of relationship update according to the second embodiment. The process of FIG. 11 is performed in step S16 of FIG. 10, and will now be described step by step.

(S21) The control unit 150 receives the identification information of two data items whose relationship has been detected from the access unit 140. The control unit 150 obtains the coordinates of the two data items with reference to the data management table 132. The control unit 150 also obtains the coordinates of segments (may be referred to as analysis target segments) to which the two data items belong with reference to the segment management table 131. It is now assumed that a vector represented by the coordinates of one data item is $p_i$, and a vector represented by the coordinates of the segment to which the data item belongs is $q_i$. It is also assumed that a vector represented by the coordinates of the other data item is $p_j$, and a vector represented by the coordinates of the segment to which the other data item belongs is $q_j$. The suffixes i and j are used to distinguish the data items and segments from each other.

(S22) The control unit 150 updates the vector $p_i$ and $p_j$ with the following equations (1) and (2).

$$\vec{p}_{i,m+1} = \alpha\vec{p}_{i,m} + \left(1 - \alpha\right)\vec{q}_j \qquad (1)$$

$$\vec{p}_{j,n+1} = \alpha\vec{p}_{j,n} + \left(1 - \alpha\right)\vec{q}_i \qquad (2)$$

In these equations, the suffixes m and n are integers of zero or greater and indicate how many times a corresponding vector has been updated. Initial values of m and n are both zero (initial values are previously given). In addition, a weighting coefficient $\alpha$ is a real number that satisfies $0<\alpha<1$. A certain value may be set as the weighting coefficient $\alpha$ according to an environment. For example, if the current relationship between data items is given importance, it is preferable that $\alpha$ is set to about 0.9. The control unit 150 registers the update result in the data management table 132.

(S23) The control unit 150 obtains the coordinates of all the data items (may be referred to as analysis target data items) belonging to the analysis target segments with reference to the data management table 132 and the membership table 133.

(S24) The control unit 150 divides the analysis target data items into groups on the basis of the coordinates of the analysis target data items and the coordinates of the analysis target segments (determines which data items are to belong to each segment). More specifically, the control unit 150 makes this determination in such a way that the sum DS (=DS1 + DS2) of distances is the minimum. DS1 is the sum of the distances between the coordinates of individual data items that belong to one segment and the coordinates of the segment. D2 is the sum of the distances between the coordinates of individual data items that belong to the other segment and the coordinates of the other segment.

(S25) The control unit 150 updates the membership table 133 on the basis of the grouping result obtained in step S24. In this connection, in the case where there is no change in the data items belonging to any segments, the control unit 150 skips steps S25 and S26.

(S26) With respect to each segment whose data items have been changed, the control unit 150 registers information indicating that there is a change in the data items belonging to the segment, in the segment management table 131.

In this connection, it is assumed in steps S21 and S22 that two data items belong to different segments. However, the two data items may belong to the same segment. In this case, the following equations (3) and (4) may be used, instead of the above equations (1) and (2), to update the coordinates of each data item.

$$\vec{p}_{i,m+1} = \alpha \vec{p}_{i,m} + \left(1 - \alpha\right)\vec{q} \qquad (3)$$

$$\vec{p}_{j,n+1} = \alpha \vec{p}_{j,n} + \left(1 - \alpha\right)\vec{q} \qquad (4)$$

As a result, the coordinates of the two data items whose relationship was detected are set closer to the coordinates of the same segment to which the two data items belong. This means that the two data items belonging to the same segment have a stronger relationship. In this connection, in the case where the two data items whose relationship was detected belong to the same segment, the control unit 150 skips steps S23 to S26. The above step S24 will now be described concretely.

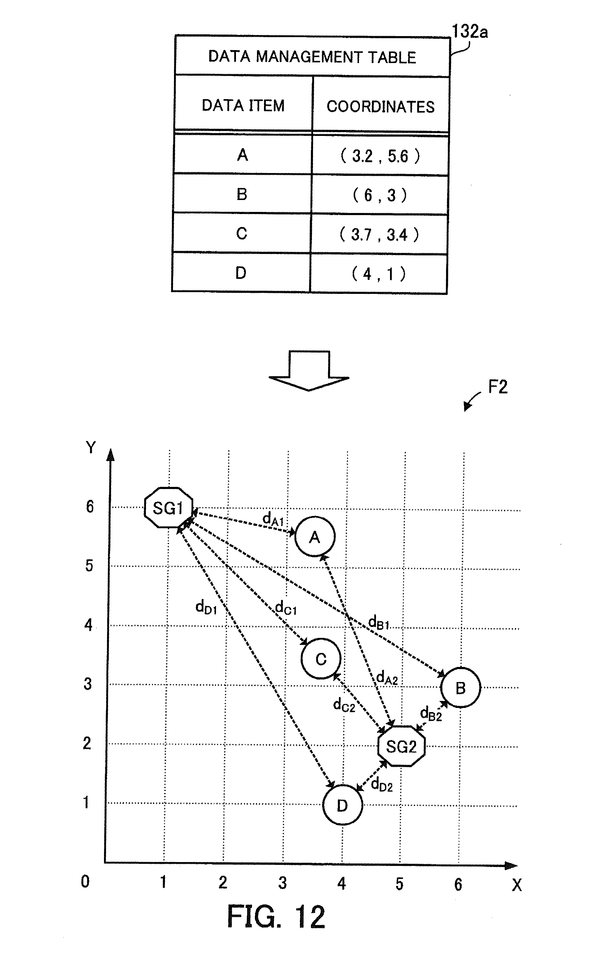

FIG. 12 illustrates an example of distances between data items and segments according to the second embodiment. FIG. 12 illustrates a state where a relationship between the data items A and C is detected and the coordinates of the data items A and C are updated in step S22. A data management table 132a is obtained by updating the coordinates of the data items A and C in the data management table 132. A coordinate system F2 illustrates the coordinates of the individual data items indicated by the data management table 132a.

In the coordinate system F2, a distance $d_{A1}$ is the distance between the coordinates of the data item A and the coordinates of the segment SG1. A distance $d_{A2}$ is the distance between the coordinates of the data item A and the coordinates of the segment SG2. A distance $d_{B1}$ is the distance between the coordinates of the data item B and the coordinates of the segment SG1. A distance $d_{B2}$ is the distance between the coordinates of the data item B and the coordinates of the segment SG2. A distance $d_{C1}$ is the distance between the coordinates of the data item C and the coordinates of the segment SG1. A distance $d_{C2}$ is the distance between the coordinates of the data item C and the coordinates of the segment SG2. A distance $d_{D1}$ is the distance between the coordinates of the data item D and the coordinates of the segment SG1. A distance $d_{D2}$ is the distance between the coordinates of the data item D and the coordinates of the segment SG2.

For example, the individual distances are as follows: $d_{A1}$=2.23, $d_{A2}$=4.02, $d_{B1}$=5-83, $d_{B2}$=1.41, $d_{C1}$=3.74, $d_{C2}$=1-91, $d_{D1}$=5.83, and $d_{D2}$=1.41.

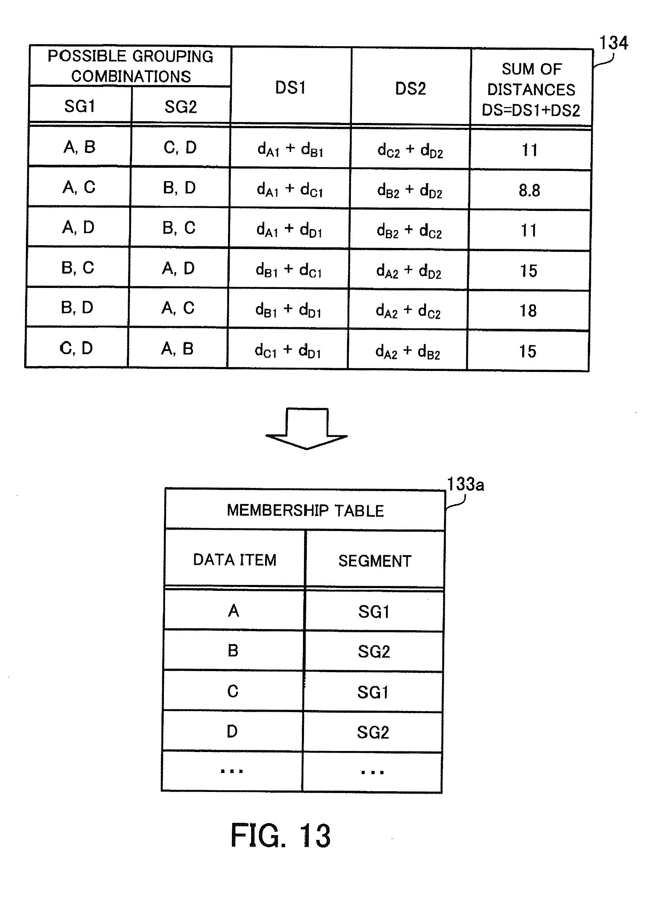

FIG. 13 illustrates an example of how to calculate the sum of distances according to the second embodiment. In the case of the example of FIG. 12, there are six possible grouping combinations for the data items A, B, C, and D. A table 134 illustrates the possible combinations. The table 134 may be stored in the management information storage unit 130 for the control unit 150 to execute the following calculation.

(1) A combination where the data items A and B belong to the segment SG1 and the data items C and D belong to the segment SG2. In this case, DS1 is calculated as $d_{A1} + d_{B1}$ = 8.06. DS2 is calculated as $d_{C2} + d_{D2}$ = 3.32.

Therefore, DS is calculated as DS1 + DS2 = 11 (the number of significant figures is two, and this applies hereafter).

(2) A combination where the data items A and C belong to the segment SG1 and the data items B and D belong to the segment SG2. In this case, DS1 is calculated as $d_{A1} + d_{C1} = 5.97$. DS2 is calculated as $d_{B2} + d_{D2} = 2.82$. Therefore, DS is calculated as DS1 + DS2 = 8.8.

(3) A combination where the data items A and D belong to the segment SG1 and the data items B and C belong to the segment SG2. In this case, DS1 is calculated as $d_{A1} + d_{D1} = 8.06$. DS2 is calculated as $d_{B2} + d_{C2} = 3.32$. Therefore, DS is calculated as DS1 + DS2 = 11.

(4) A combination where the data items B and C belong to the segment SG1 and the data items A and D belong to the segment SG2. In this case, DS1 is calculated as $d_{B1} + d_{C1} = 9.57$. DS2 is calculated as $d_{A2} + d_{D2} = 5.43$. Therefore, DS is calculated as DS1 + DS2 = 15.

(5) A combination where the data items B and D belong to the segment SG1 and the data items A and C belong to the segment SG2. In this case, DS1 is calculated as $d_{B1} + d_{D1} = 11.66$. DS2 is calculated as $d_{A2} + d_{C2} = 5.93$. Therefore, DS is calculated as DS1 + DS2 = 18.

(6) A combination where the data items C and D belong to the segment SG1 and the data items A and B belong to the segment SG2. In this case, DS1 is calculated as $d_{C1} + d_{D1} = 9.57$. DS2 is calculated as $d_{A2} + d_{B2} = 5.43$. Therefore, DS is calculated as DS1 + DS2 = 15.

The control unit 150 selects a grouping combination that provides the minimum DS value from these possible grouping combinations. Among the above combinations (1) to (6), the combination (2) has the minimum DS value. Therefore, the control unit 150 determines to cause the data items A and C to belong to the segment SG1 and to cause the data items B and D to belong to the segment SG2. The control unit 150 then updates the membership table 133 to the membership table 133a according to this result.

For example, to simplify the above grouping, the control unit 150 may select one of the segments SG1 and SG2 using a round-robin algorithm and then sequentially cause data items to belong to the selected segment in order from the closest to the selected segment. For example, in the case where the segment SG1 is selected, the coordinates of the data items A and C are the closest to the coordinates of the segment SG1. Therefore, the control unit 150 determines to cause the data items A and C to belong to the segment SG1. The control unit 150 then determines to cause the remaining data items B and D to belong to the segment SG2.

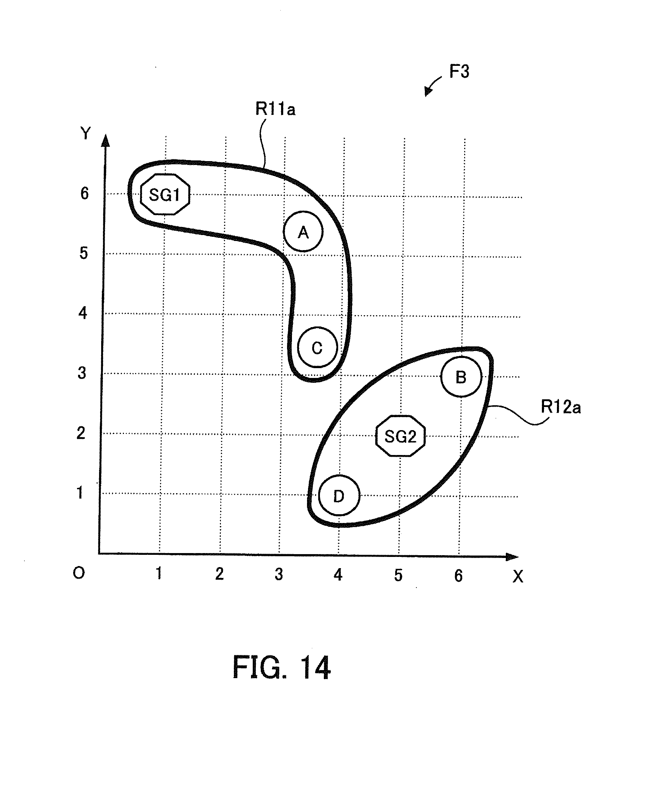

FIG. 14 illustrates an example of updated grouping according to the second embodiment. A coordinate system F3 illustrates a state where grouping is determined as indicated by the membership table 133a. A region R11a is a region that surrounds the data items A and C now belonging to the segment SG1. It may be said that the region R11a corresponds to the group G11. A region R12a is a region that surrounds the data items B and D now belonging to the segment SG2. It may be said that the region R12a corresponds to the group G12.

Data items arranged in the cache 110 are likely to be frequently accessed, and there is a high possibility that relationships among the data items are updated as long as these data items exist in the cache 110. Therefore, even if the segments are updated in the data storage unit 120 each time the data items belonging to a segment are changed, there is a high possibility that data items that belong to each segment are re-determined (changed). In addition, segments may be updated too frequently if the update is done each time the data items belonging to a segment are changed, which probably increases the workload of the sever 100 for the updates.

To address this issue, the control unit 150 is designed to update a segment in the data storage unit 120 when a storage space corresponding to the segment is released from the cache 110. The following describes a procedure for this update.

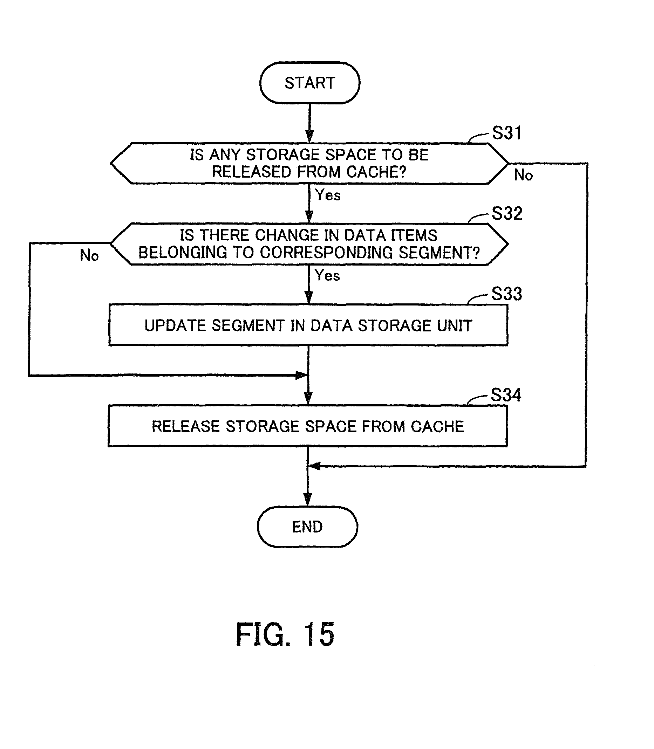

FIG. 15 is a flowchart illustrating an example of segment update according to the second embodiment. The process of FIG. 15 will be described step by step.

(S31) The control unit 150 determines whether to release any storage space from the cache 110. If any storage space is to be released, the process proceeds to step S32. If no storage space is to be released, the process is completed. For example, if there is insufficient space in the cache 110, the control unit 150 releases the least recently accessed storage space in order to reuse the storage space (Least Recently Used (LRU) algorithm).

(S32) The control unit 150 determines with reference to the segment management table 131 whether or not there is a change in the data items belonging to the segment stored in the storage space to be released. If there is a change in the data items, the process proceeds to step S33. If there is no change in the data items, the process proceeds to step S34. In this connection, the information on the segment stored in each storage space of the cache 110 is registered by the access unit 140 and stored in the management information storage unit 130, as explained in step S12 of FIG. 10.

(S33) The control unit 150 updates the segment stored in the storage space to be released by reorganizing the segment in the data storage unit 120 according to the changed data items of the segment. For example, in the case where the data items A and B arranged in the segment SG1 are changed to the data items A and C, the control unit 150 creates a segment for arranging the data items A and C in the data storage unit 120, as the segment SG1. The control unit 150 then releases the storage space for the previous segment SG1 (the segment where the data items A and B are arranged) from the data storage unit 120, and manages the released storage space as an available space. Further, the control unit 150 reorganizes a segment to which the data item (data item B in this example) removed from the reorganized segment is to belong, in the data storage unit 120. For example, if it is determined that the data item B is to belong to the segment SG2, the control unit 150 reorganizes the segment SG2 as well.

(S34) The control unit 150 releases the storage space to be released, from the cache 110, so that the storage space becomes available.

As described above, when a storage space is released from the cache 110 with the LRU algorithm, the control unit 150 reflects a change in the data items belonging to the segment stored in the storage space, on the data storage unit 120. The segment update in the data storage unit 120 for a group that has not been accessed for a predetermined time period in the cache 110 reduces the frequency of segment update in the data storage unit 120. This eventually reduces the workload of the server 100 for the segment update.

In this case, on the premise that data accessed once will not be accessed for a while, a storage space to be released may be determined with Most Recently Used (MRU) algorithm. In this case, the segment update in the data storage unit 120 may be performed with the same procedure as above.

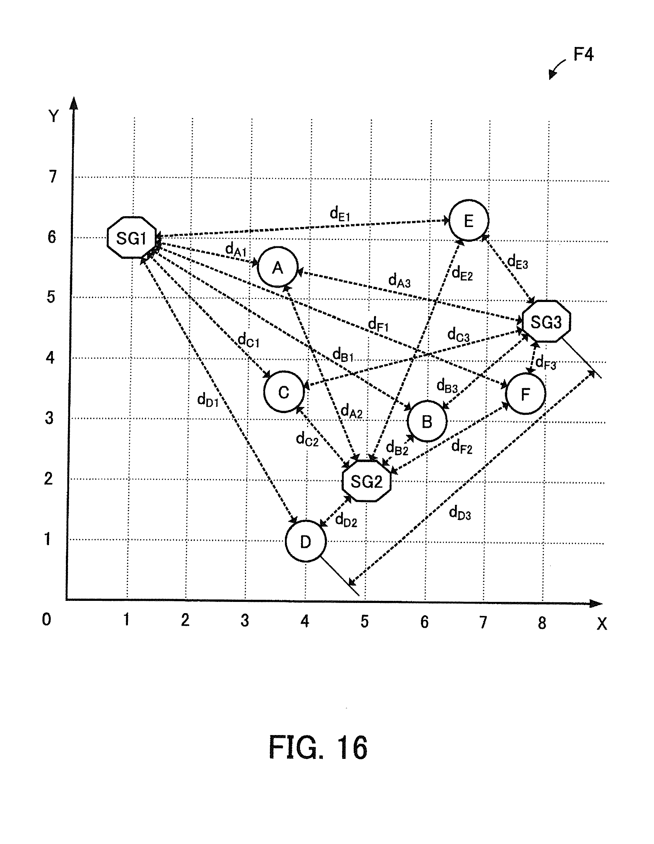

FIG. 16 illustrates another example of distances between data items and segments according to the second embodiment. The example described with reference to up to FIG. 15 is about which data items are to belong to each of segments (analysis target segments) to which data items whose relationship was detected belong. On the other hand, another segment may be added as an analysis target segment. For example, when a relationship between the data items A and C belonging to the segments SG1 and SG2 is detected, a segment SG3 that is the closest to the segment SG1 or SG2 may be included as an analysis target segment. Then, steps S23 to S26 of FIG. 11 may be executed to determine which data items are to belong to each of the analysis target segments.

More specifically, a coordinate system F4 illustrates the segments SG1, SG2, and SG3. Data items E and F belong to the segment SG3. In this case, distances $d_{A3}$, $d_{B3}$, $d_{C3}$, $d_{D3}$, $d_{E1}$, $d_{E2}$, $d_{E3}$, $d_{F1}$, $d_{F2}$, and $d_{F3}$ are considered in addition to the distances exemplified in FIG. 12. The distance $d_{A3}$ is the distance between the coordinates of the data item A and the coordinates of the segment SG3. The distance $d_{B3}$ is the distance between the coordinates of the data item B and the coordinates of the segment SG3. The distance $d_{C3}$ is the distance between the coordinates of the data item C and the coordinates of the segment SG3. The distance $d_{D3}$ is the distance between the coordinates of the data item D and the coordinates of the segment SG3.

The distance $d_{E1}$ is the distance between the coordinates of the data item E and the coordinates of the segment SG1. The distance $d_{E2}$ is the distance between the coordinates of the data item E and the coordinates of the segment SG2. The distance $d_{E3}$ is the distance between the coordinates of the data item E and the coordinates of the segment SG3. The distance $d_{F1}$ is the distance between the coordinates of the data item F and the coordinates of the segment SG1. The distance $d_{F2}$ is the distance between the coordinates of the data item F and the coordinates of the segment SG2. The distance $d_{F3}$ is the distance between the coordinates of the data item F and the coordinates of the segment SG3.

Using the concepts of step S24 of FIG. 11, the data items A, B, C, D, E, and F are divided into groups on the basis of the above distances (including the distances exemplified in FIG. 12). More specifically, the control unit 150 determines which data items are to belong to each of the segments SG1, SG2, and SG3, in such a way that the sum of distances, i.e., DS = DS1 + DS2 + DS3, is the minimum. For example, DS1 is the sum of the distances between the coordinates of individual data items that belong to the segment SG1 and the coordinates of the segment SG1. DS2 is the sum of the distances between the coordinates of individual data items that belong to the segment SG2 and the coordinates of the segment SG2. DS3 is the sum of the distances between the coordinates of individual data items that belong to the segment SG3 and the coordinates of the segment SG3.

As describe above, the number of analysis target segments may be increased to three or more. For example, if one more analysis target segment is added in the example of FIG. 16, the sum DS of distances is represented as DS = DS1 + DS2 + DS3 + DS4. In the case where the number of analysis target segments is N (N is an integer of two or greater), the sum DS of distances is represented as DS = DS1 + ... + DSN (DSN is the sum of the distances between the coordinates of individual data items that belong to the segment SGN and the coordinates of the segment SGN). In this way, it may be determined which data items are to belong to each segment, taking into account the coordinates of segments other than the segments to which data items whose relationship was detected belong.

Alternatively, as described earlier, the control unit 150 may select one of the segments SG1, ..., and SGN using a round-robin algorithm, and sequentially cause data items to belong to the selected segment in order from the closest to the coordinates of the selected segment.

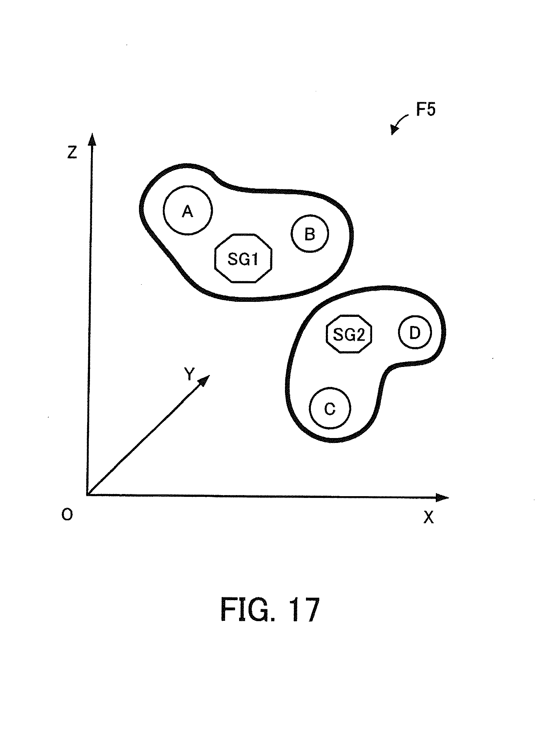

FIG. 17 illustrates another example of a coordinate system according to the second embodiment. A coordinate system F5 is a three-dimensional coordinate system in which the x axis, the y axis, and the z axis are perpendicular. The segments SG1 and SG2 and the data items A, B, C, and D may be given three-dimensional coordinates. Alternatively, one-dimensional coordinates or four- or higher dimensional coordinates may be given to the data items and the segments if the distances (the absolute value of a vector connecting two coordinates) between the coordinates of the data items and the coordinates of the segments are obtained.

As described above, the server 100 is able to improve the accuracy of the grouping with minimizing an increase in the amount of the RAM 102 used.

Here, for example, there is considered an idea of referring to an access history of previous access to data items at the time of grouping and grouping data items that were accessed successively with higher frequency into the same group.

In this case, statistically speaking, the more information the access history used for the grouping has, the more reliable grouping is achieved. However, if all the access history is stored, the information amount of the access history increases with time, thereby using more RAM 102. To save the amount of the RAM 102 used, one of considered ideas is to store the access history only for a predetermined time period. In this idea, however, the information for the other time period is dropped from the access history, thereby degrading the accuracy of the grouping. A specific example will be described below.

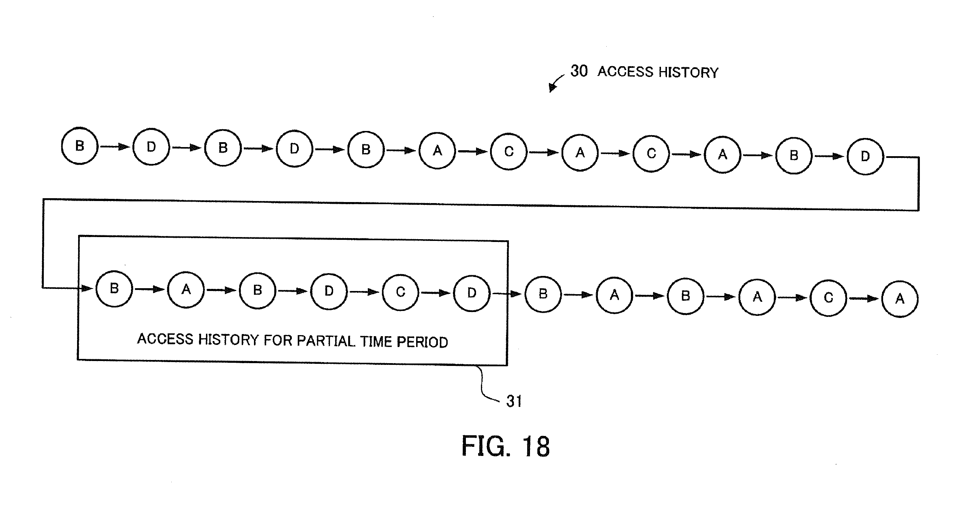

FIG. 18 illustrates an example of an access history. An access history 30 is an example of a history of access requests for the data items A, B, C, and D for a relatively long time period. An access history 31 is an example of a history of access requests for the data items A, B, C, and D for a part of the time period of the access history 30.

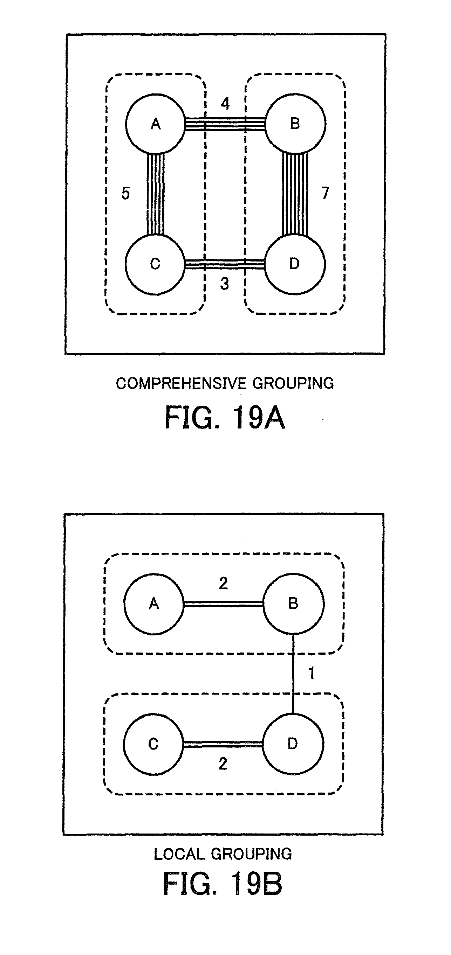

FIGS. 19A and 19B illustrate examples of grouping based on access histories. FIG. 19A illustrates an example of grouping based on the access history 30. It is said that FIG. 19A illustrates the case of performing (temporally) comprehensive grouping, as compared with the case of performing grouping based on the access history 31.

In this example based on the access history 30, the data items A and B were accessed four times in the order of A and then B or in the order of B and then A. The data items A and C were accessed five times in the order of A and then C or in the order of C and then A. There was no access to the data items A and then D or to the data items D and then A. There was no access to the data items B and then C or to the data items C and then B. The data items B and D were accessed seven times in the order of B and then D or in the order of D and then B. The data items C and D were accessed three times in the order of C and then D or in the order of D and then C. In the case where the segment size is set to two, the data items A and C and the data items B and D, which were accessed successively with relatively high frequency, are grouped into the first group and the second group, respectively.

On the other hand, FIG. 19B illustrates the case of grouping based on the access history 31. It is said that FIG. 19B illustrates the case of performing (temporally) local grouping, as compared with the case of performing grouping based on the access history 30.

In this example based on the access history 31, the data items A and B were accessed twice in the order of A and then B or in the order of B and then A. There was no access to the data items A and then C or to the data items C and then A. There was no access to the data items A and then D or to the data items D and then A. There was no access to the data items B and then C or to the data items C and then B. The data items B and D were accessed once in the order of B and then D or in the order of D and then B. The data items C and D were accessed twice in the order of C and then D or in the order of D and then C. In the case where the segment size is set to two, the data items A and B and the data items C and D, which were accessed successively with relatively high frequency, are grouped into the first group and the second group, respectively.

In this way, there is the possibility that different grouping results are obtained depending on which access history 30 and 31 is used. Statistically speaking, the access history 30 contains more information than the access history 31, and therefore the use of the access history 30 results in more reliable grouping where the data items in a group are more likely to be accessed successively. However, storing all the access history 30 uses more RAM 102, and the amount of the RAM 102 used increases with time.

On the other hand, storing only the access history 31 having limited information reduces the amount of the RAM 102 used, as compared with the case of storing the access history 30. However, the information for a time period other than that of the access history 31 is dropped from the access history, thereby degrading the accuracy of the grouping as compared with the case of using the access history 30 (i.e., statistically, reducing the reliability in terms of the possibility of successively accessing the data items in a group). For example, as illustrated in FIGS. 19A and 19B, from the perspective point of view, although the frequency of successive access to the data items A and C is relatively high and the frequency of successive access to the data items B and D is also relatively high, the data items A and B are grouped and the data items C and D are grouped.

By contrast, the server 100 manages relationships among data items using the coordinates of the data items. Then, each time a relationship between data items is detected, the server 100 updates the coordinates of the data items so as to record that the data items have a stronger relationship. Therefore, there is no need for the server 100 to hold any access history of access to data items. This is because the coordinates of each data item at a certain time point are information that reflects the access history of previous access prior to the time point.

In this case, the server 100 may just keep a space for storing the coordinates of the individual data items in the RAM 102. This minimizes an increase in the amount of the RAM 102 used, as compared with the case of storing all the access history. In addition, it is possible to reflect all the access history of previous access (for example, the access history 30) on the coordinates of the data items, so as to improve the accuracy of the grouping as compared with the case of storing the access history for a certain time period (for example, access history 31).

In addition, the relationship between data items is updated at the time it is detected, and therefore there is no need to process a large amount of information at a time, unlike the case of analyzing all the access history. This minimizes an increase in the workload of the server 100 for analyzing the relationship between the data items. As described above, it is possible to efficiently manage relationships among data items using the coordinates of the data items.

In this connection, in the above example, the segment size is set to two. Alternatively, the segment size may be set to three or more. For example, consider the case where the segment size is set to k (k is an integer of three or greater) and 2k data items are divided into the segments SG1 and SG2. In this case, DS1 is the sum of the distances between the coordinates of k individual data items and the coordinates of the segment SG1. DS2 is the sum of the distances between the coordinates of the remaining k individual data items and the coordinates of the segment SG2. Then, from the possible grouping combinations, a combination that provides the minimum DS value (=DS1 + DS2) is selected. In this way, the method of the second embodiment is applicable to the case where the segment size is three or more.

(Third Embodiment)

The following describes a third embodiment. Differential features from the above-described second embodiment will mainly be described, and explanation for the same features will be omitted.

The second embodiment describes the example of determining which data items are to belong to each segment on the basis of the distances between the data items and the segments. Alternatively, it may be determined which data items are to belong to each segment, on the basis of the inner products of vectors. The third embodiment describes a function for this method.

An information processing system of the third embodiment is the same as that of the second embodiment illustrated in FIG. 2. In addition, apparatuses and functions that form the third embodiment are the same as those of the second embodiment illustrated in FIGS. 3 and 4. Therefore, the same reference numerals and names as in the second embodiment are used in the third embodiment.

The third embodiment employs the same access process as illustrated in FIG. 10 and the same segment update process as illustrated in FIG. 15. On the other hand, the third embodiment employs a relationship update process that is partially different from that illustrated in FIG. 11.

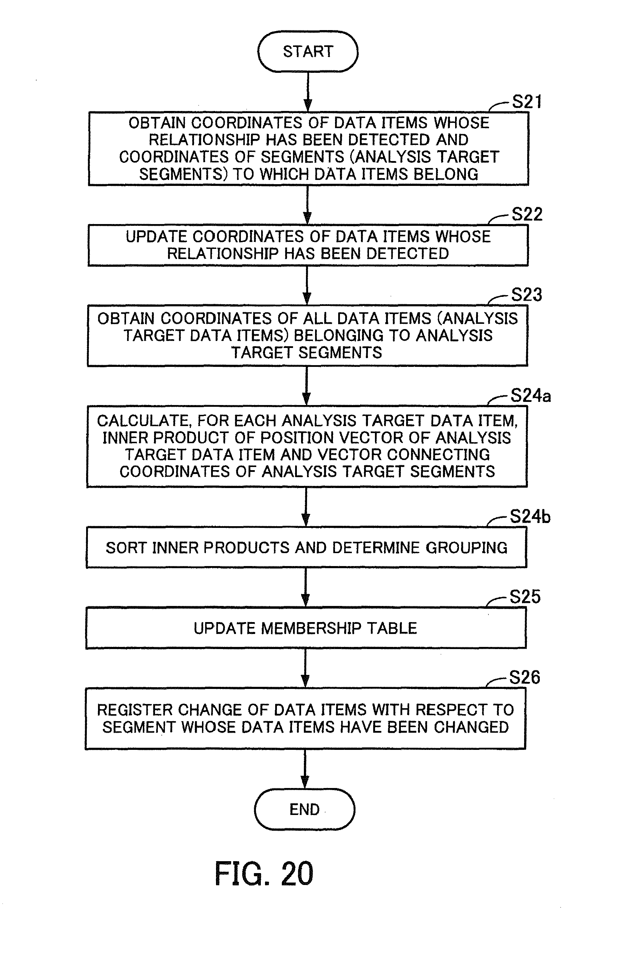

FIG. 20 is a flowchart illustrating an example of relationship update according to the third embodiment. The process of FIG. 20 will be described step by step. In the third embodiment, steps S24a and S24b are executed, in place of step S24 of FIG. 11. Therefore, steps S24a and S24b will be described and the other steps will not be described again.

(S24a) The control unit 150 calculates, for each analysis target data item, the inner product of a vector represented by the coordinates of the analysis target data item (position vector of the analysis target data item) and a vector connecting the coordinates of analysis target segments. The position vector is a vector that represents the position of the coordinates of a data item in relation to an origin.

(S24b) The control unit 150 sorts the inner products calculated in step S24a in ascending order, and divides the data items into groups in the order of the size of the inner product.

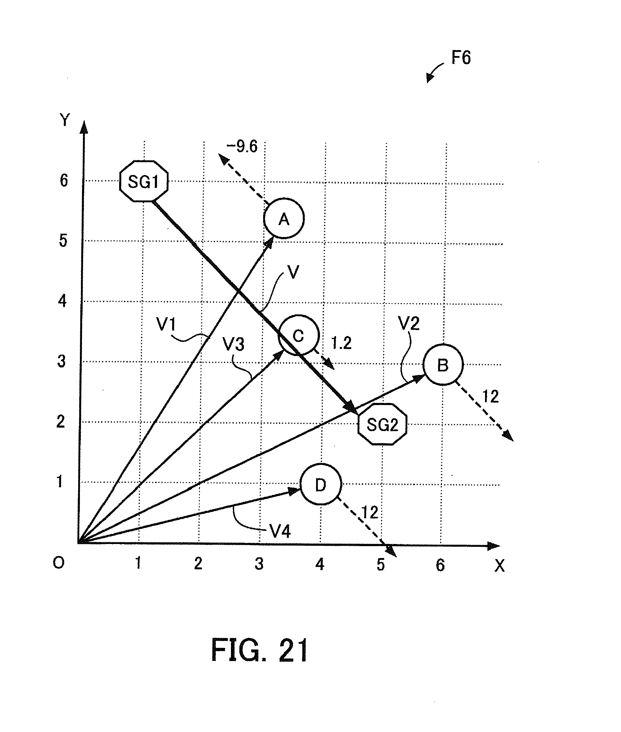

FIG. 21 illustrates an example of inner products according to the third embodiment. A coordinate system F6 exemplifies vectors V, V1, V2, V3, and V4. The vector V is a vector directed from the coordinates of a segment SG1 to the coordinates of a segment SG2.

The vector V1 is a vector (the position vector of the data item A) represented by the coordinates of the data item A. The vector V2 is a vector (the position vector of the data item B) represented by the coordinates of the data item B. The vector V3 is a vector (the position vector of the data item C) represented by the coordinates of the data item C. The vector V4 is a vector (the position vector of the data item D) represented by the coordinates of the data item D.

For example, the inner product of the vector V and the vector V1 is calculated as -9.6. The inner product of the vector V and the vector V2 is calculated as 12. The inner product of the vector V and the vector V3 is calculated as 1.2. The inner product of the vector V and the vector V4 is calculated as 12. The sizes of the inner products may be used to determine, for each data item A, B, C, and D, the coordinates of which of the segments SG1 and SG2 are relatively closer to the coordinates of the data item A, B, C, and D.

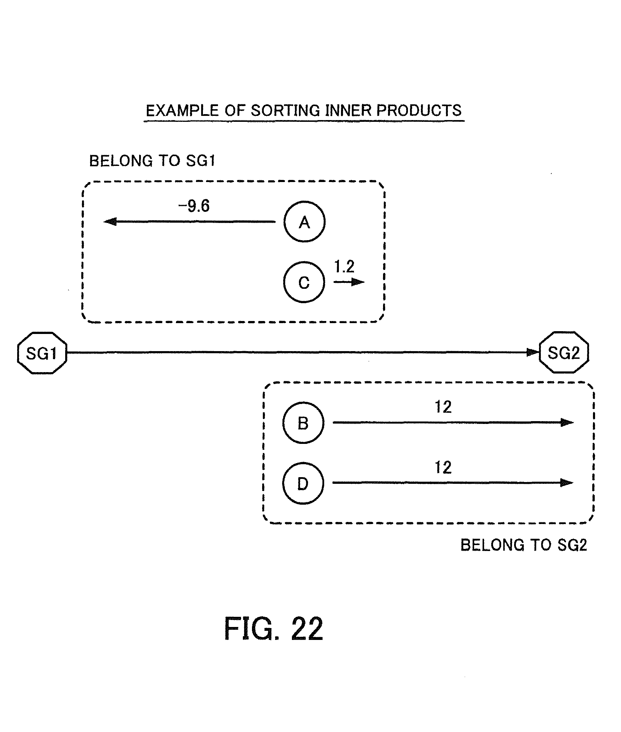

FIG. 22 illustrates an example of a result of sorting inner products according to the third embodiment. In FIG. 22, data items are arranged in such a way that the inner products of their corresponding vectors V1, V2, V3, and V4 with respect to the vector V are sorted in ascending order (in FIG. 22, these are arranged from the upper side of the sheet). More specifically, the data items A, C, B, and D are arranged in this order (in this connection, the data items B and D have the same inner product, and therefore the order of the data items B and D may be reversed).

Since the vector V is a vector directed from the coordinates of the segment SG1 to the coordinates of the segment SG2, a smaller inner product between the vector V and the vector of a data item means that the coordinates of the data item are closer to the coordinates of the segment SG1 than to the coordinates of the segment SG2. Therefore, in this case, the control unit 150 determines to cause the data items A and C to belong to the segment SG1 and to cause the data items B and D to belong to the segment SG2. Then, the control unit 150 updates the membership table 133 to the membership table 133a.

As described above, it may be determined which data items are to belong to each segment, on the basis of the inner products of the vectors of the individual data items and the vector between the segments. This technique has a lower computational cost than the case of calculating the sum DS of distances for all possible combinations as indicated by the table 134 of FIG. 13. This method using inner products is very useful especially for determining which of two segments each data item is to belong to.

In the above example, it is assumed that the segment size is set to two. However, the segment size may be set to three or more. For example, consider the case where the segment size is set to k (k is an integer of three or greater) and 2k data items are divided into the segments SG1 and SG2.

In this case, the control unit 150 calculates 2k inner products of the 2k individual vectors represented by the coordinates of the 2k data items and a vector directed from the coordinates of the segment SG1 to the coordinates of the segment SG2. Then, the control unit 150 determines to cause k data items that have relatively small inner products to belong to the segment SG1 and also determines to cause k data items that have relatively large inner products to belong to the segment SG2. In this way, the method of the third embodiment is applicable to the case where the segment size is three or more.

(Fourth Embodiment)

The following describes a fourth embodiment. Differential features from the above-described second and third embodiments will mainly be described, and explanation for the same features will be omitted.

In the second and third embodiments, each time a relationship between data items is detected, the coordinates of these data items are updated. Alternatively, when a relationship between data items is detected a plural number of times, the coordinates of these data items may be updated. The fourth embodiment describes a function for this method.

An information processing system of the fourth embodiment is the same as that of the second embodiment illustrated in FIG. 2. In addition, apparatuses and functions that form the information processing system of the fourth embodiment are the same as those of the second embodiment illustrated in FIGS. 3 and 4. Therefore, the same reference numerals and names as in the second embodiment are used in the fourth embodiment. However, the fourth embodiment uses a data management table 132b, in place of the data management table 132 used in the second embodiment.

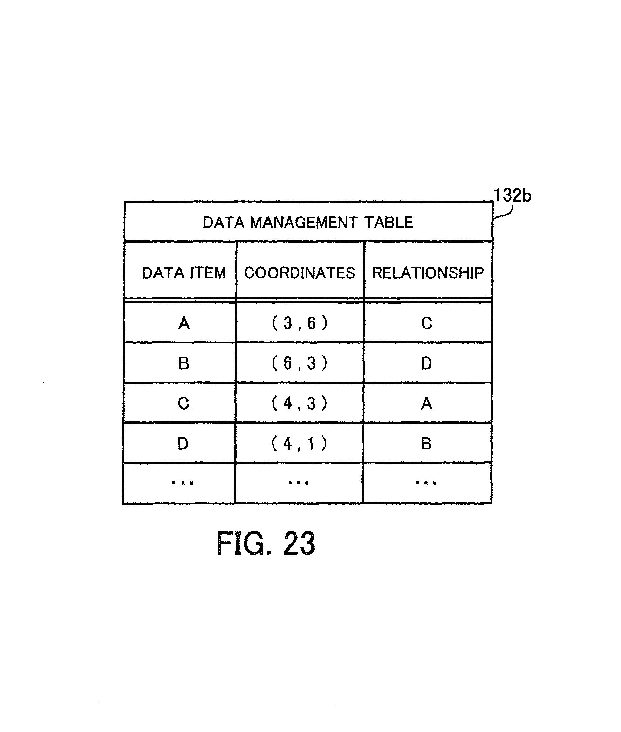

FIG. 23 illustrates an example of a data management table according to the fourth embodiment. The data management table 132b is stored in a management information storage unit 130, and includes fields for data item, coordinates, and relationship.

The data item field contains the identification information of a data item. The coordinates field contains the coordinates associated with the data item. The relationship field contains the identification information of another data item whose relationship with the data item was detected.

For example, the data management table 132b includes a record with a data item of "A", coordinates of "(3, 6)", and a relationship of "C". This record indicates that the two-dimensional coordinates of "(3, 6)" is associated with the data item A and that the data items A and C were accessed successively.

The following describes a procedure of the fourth embodiment. The fourth embodiment employs an access process that is partially different from that illustrated in FIG. 10.

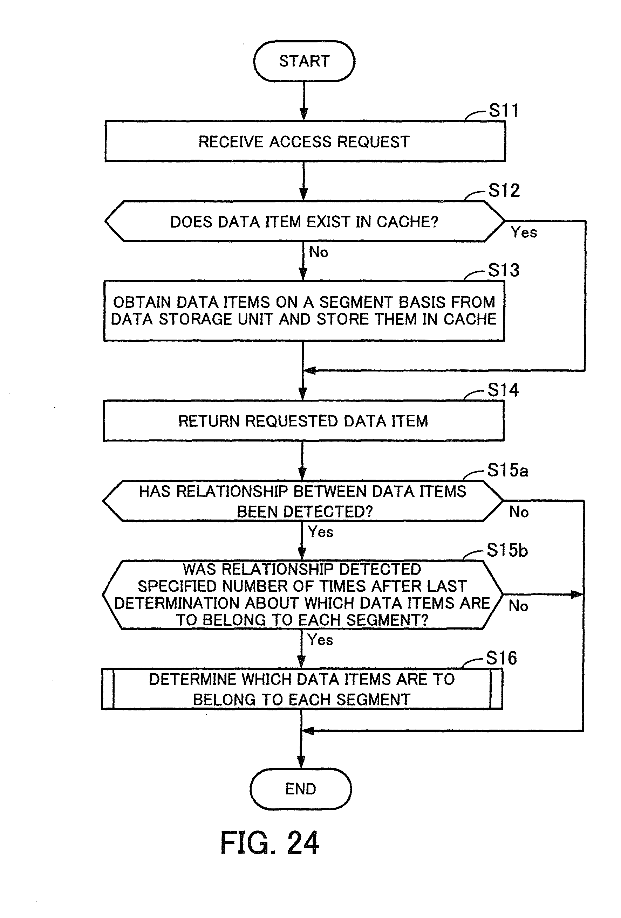

FIG. 24 is a flowchart illustrating an example of relationship update according to the fourth embodiment. Hereinafter, the process of FIG. 24 will be described step by step. In the fourth embodiment, steps S15a and S15b are executed, in place of step S15 of FIG. 10. Therefore, steps S15a and S15b will be described and the other steps will not be described again.

(S15a) The access unit 140 determines whether a relationship between data items has been detected or not. If a relationship has been detected, the access unit 140 records the detected relationship between the data items in the data management table 132b, and then the process proceeds to step S15b. If no relationship has been detected, the process is completed. As described in step S15, when two data items are accessed successively, the access unit 140 detects a "successive access" relationship between these data items. For example, when the data items A and C are accessed successively, the data C is recorded in the entry (relationship field) of the data item A and the data A is recorded in the entry (relationship field) of the data item C in the data management table 132b.

(S15b) The access unit 140 determines whether relationship was detected a specified number of times (for example, twice, five times, or the like) after the last determination about which data items are to belong to each segment. If relationship was detected the specified number of times, the process proceeds to step S16. Otherwise, the process is completed.

As described above, the access unit 140 may record relationships between data items in the data management table 132b. In this case, in step S16 (or in the relationship update process of FIG. 11), the control unit 150 updates the coordinates of all data items which have other data items in their entries of the relationship field, according to the detected relationships with reference to the data management table 132b. Then, the control unit 150 determines which data items are to belong to each segment, on the basis of the updated coordinates. When a segment to which a data item is to belong is determined, the control unit 150 clears the entry of the relationship field for the data item in the data management table 132b.

In this connection, it is determined in step S15b whether relationship between data items was detected a specified number of times or not. Alternatively, it may be determined whether or not a prescribed time has passed after the last determination about which data items are to belong to each segment. In this case, when the prescribed time has passed, the process proceeds to step S16. Otherwise, the process is completed.

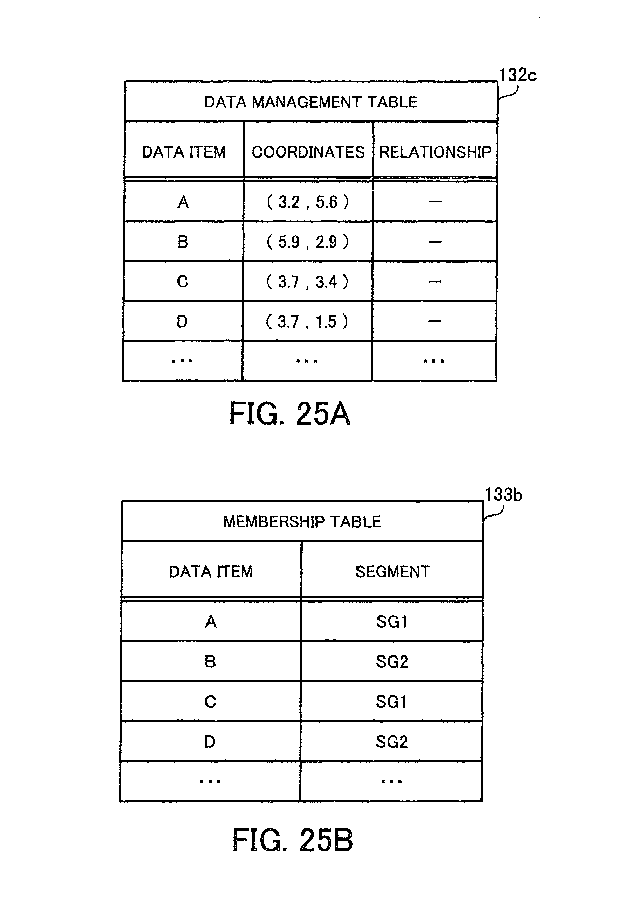

FIGS. 25A and 25B illustrate an example of management information from immediately after update according to the fourth embodiment. FIG. 25A exemplifies a data management table 132c. For example, the specified number of times for use in step S15b is set to two. When relationships between the data items A and C and between the data items B and D (two relationships) are detected, the control unit 150 updates the coordinates of these data items. Immediately before the coordinates are updated, the data items A and B belong to the segment SG1 and the data items C and D belong to the segment SG2.

Therefore, the control unit 150 updates, with the equations (1) and (2), the coordinates of the data item A using the coordinates of the segments SG2 (this is because the data item C belongs to the segment SG2) and the coordinates of the data item C using the coordinates of the segment SG1 (this is because the data item A belongs to the segment SG1).

Similarly, the control unit 150 updates, with the equations (1) and (2), the coordinates of the data item B using the coordinates of the segments SG2 (this is because the data item D belongs to the segment SG2) and the coordinates of the data item D using the coordinates of the segment SG1 (this is because the data item B belongs to the segment SG1). In this connection, in the data management table 132c, the relationship field for each data item has been cleared (represented by hyphen "-").

The data management table 132c illustrates the updated coordinates of the data items A, B, C, and D in the case of $\alpha=0.9$. As a result, the control unit 150 determines to cause the data items A and C to belong to the segment SG1 and to cause the data items B and D to belong to the segment SG2. FIG. 25B illustrates the updated membership table 133b.

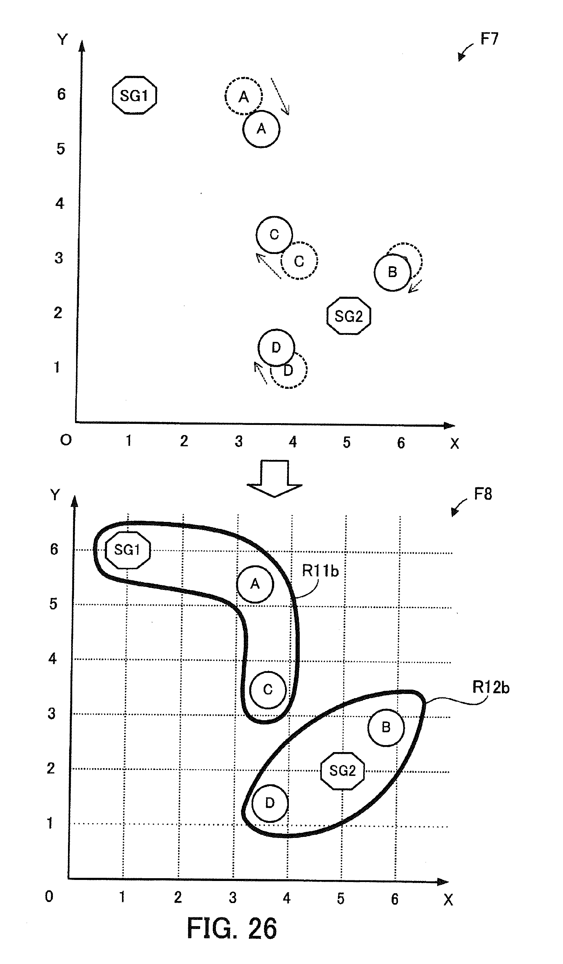

FIG. 26 illustrates an example of updated grouping according to the fourth embodiment. A coordinate system F7 illustrates the updated coordinates of the data items A, B, C, and D illustrated in FIGS. 25A and 25B. The control unit 150 obtains the data management table 132c as a result of updating the coordinates.

A coordinate system F8 illustrates a state where grouping is determined as indicated by the membership table 133b. A region R11b is a region that surrounds the data items A and C now belonging to the segment SG1. It may be said that the region R11b corresponds to the group G11. A region R12b is a region that surrounds the data items B and D now belonging to the segment SG2. It may be said that the region R12b corresponds to the group G12.

As described above, the server 100 may record a detected relationship between data items, and then after relationship is detected a plural number of times, collectively update the coordinates of the data items whose relationships were detected. In this case, the server 100 is able to improve the accuracy of the grouping with minimizing an increase in the amount of the RAM 102 used, as in the second embodiment.

(Fifth Embodiment)

The following describes a fifth embodiment. Differential features from the second to fourth embodiments will mainly be described, and explanation for the same features will be omitted.

The second to fourth embodiments use the server 100 as a node for managing data items. On the other hand, a plurality of nodes may be provided so that segments are managed by the plurality of nodes in a distributed manner. This leads to reducing the workload of each node for data access and to accelerating the data access.

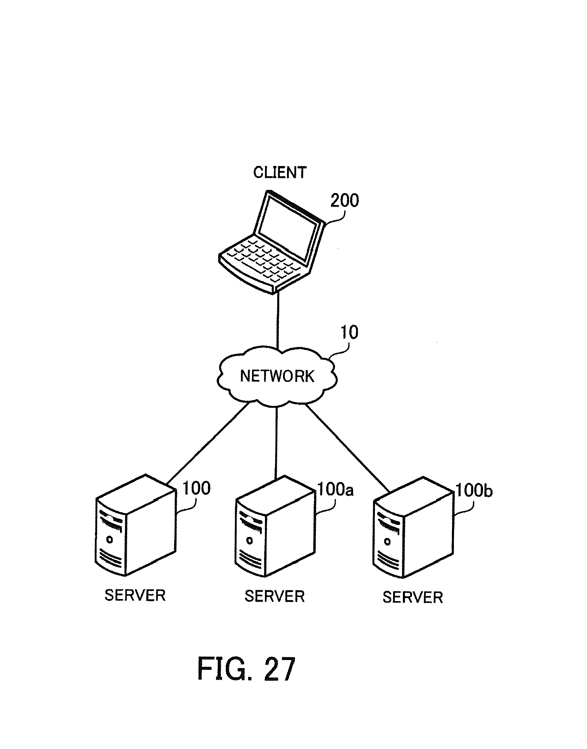

FIG. 27 illustrates an example of an information processing system according to the fifth embodiment. The information processing system of the fifth embodiment includes servers 100a and 100b in addition to the server 100 explained in the second embodiment. The servers 100a and 100b are connected to a network 10. The servers 100a and 100b are server computers that are provided with the same functions as the server 100.

The servers 100, 100a, and 100b manage a plurality of segments in a distributed manner. For example, the server 100 handles the segment SG1, the server 100a handles the segment SG2, and the server 100b handles the segment SG3. When an access request for a data item belonging to any segment is issued, a server that handles the segment responds to the access request. For example, when the server 100b receives an access request for a data item belonging to the segment SG1, the server 100b transfers the access request to the server 100. Upon receiving the access request, the server 100 returns the requested data item to the requesting source.

In this connection, the servers 100a and 100b may have the same hardware configuration as the server 100. In addition, the servers 100a and 100b may have the same functions as the server 100 described with reference to FIG.

4. However, the control units in the respective servers mutually communicate with each other so that the data management tables and membership tables stored in the servers are synchronized with the latest version. In addition, the servers 100, 100a, and 100b hold correspondences between segments and servers handling the segments.

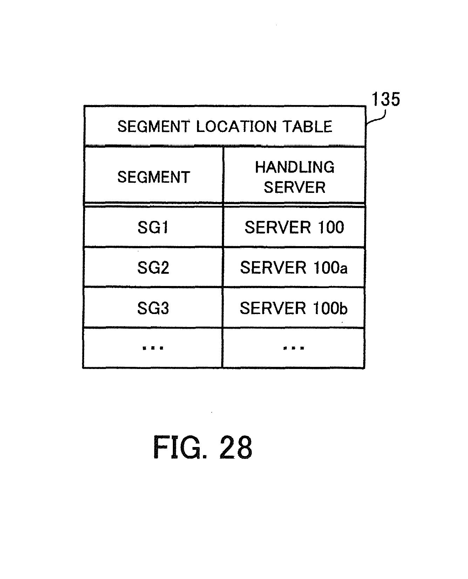

FIG. 28 illustrates an example of a segment location table according to the fifth embodiment. A segment location table 135 is stored in the management information storage unit 130. The servers 100a and 100b also hold the same tables as the segment location table 135. The segment location table 135 includes fields for segment and handling server.

The segment field contains the identification information of a segment. The handling server field contains the identification information of a server handling the segment. For example, the segment location table 135 has a record with a segment of "SG1" and a handling server of "server 100". This record indicates that the server 100 handles the segment SG1.

In this way, the servers recognize which segments each server handles. Therefore, if the coordinates of data items are changed and the data items belonging to segments are accordingly changed, each server recognizes which server to send the data items to.

Similarly to the second to fourth embodiments, the fifth embodiment is able to detect relationships between data items, to update the coordinates of data items, and to determine which data items are to belong to each segment. In addition to these, in order for the servers to detect a relationship between data items, each server notifies the other servers which data items was requested in an access request the server responded to. Alternatively, if a data item that was accessed last time is included in an access request, it is possible to recognize the data items that were accessed successively from the access request, which eliminates the necessity for the servers to make such notifications to each other.

Further, only any one of the servers may play a role of updating the coordinates of data items whose relationships were detected and determining which data items are to belong to each segment. For example, a server that responded to the last access request may play a role of updating the coordinate of data items and determining which data items are to belong to each segment, according to whether a relationship between data items was detected or not.

Still further, when a segment whose data items were changed is removed from a memory (a corresponding cache space is released) in any server, the servers communicate data items whose arrangement needs to be changed with each other, with reference to the segment location table. Then, each server updates the contents of the segments. In the fifth embodiment, there is no need to hold any access history, so that the servers 100, 100a, and 100b are able to minimize an increase in the amount of RAMs used. In addition, it is possible to reflect the access history of previous access on the coordinates of data items, so that the use of such coordinates improves the accuracy of the grouping.

In the above explanation, mainly, the RAM 102 is used as the cache 110 and the HDD 103 is used as the data storage unit 120. Alternatively another combination may be applied. For example, the RAM 102 may be used as the cache 110, and an SSD, the optical disc 13, a tape medium, or another may be used as the data storage unit 120. Yet alternatively, an SSD may be used as the cache 110, and the HDD 103, the optical disc 13, a tape medium, or another may be used as the data storage unit 120.

Further, the server computers are mainly exemplified in the second to fifth embodiments. In addition to this, the second to fifth embodiments may be applied to a processor for controlling data access, a disk apparatus, and a storage device provided with a cache memory. For example, a storage device may be provided with the same functions as the server 100 exemplified in FIG. 4.

In this connection, the information processing of the first embodiment may be realized by the operation unit 1c executing a program. The information processing of the second to fifth embodiments may be realized by a processor provided in each server executing a program. The program may be recorded on a computer-readable storage medium (for example, the optical disc 13, the memory device 14, the memory card 16, or the like).

For example, to distribute the program, storage media on which the program is recorded may be distributed. Alternatively, the program may be stored in another computer and may be transferred through a network. A computer stores (installs) the program recorded on a storage medium or transferred from the other computer, for example, in a storage device, such as the RAM 102, the HDD 103, or the like. Then, the computer reads the program from the storage device and runs the program.

According to one aspect, it is possible to improve the accuracy of the grouping.

**Claims**

1. A computer program that manages a plurality of data items (X1, X2, Y1, Y2) by grouping the plurality of data items (X1, X2, Y1, Y2) into a plurality of groups (G1, G2) and by giving coordinates to each of the plurality of data items (X1, X2, Y1, Y2) and each of the plurality of groups (G1, G2), the coordinates indicating relationships between the each of the plurality of data items and the each of the plurality of groups, and that causes a computer to perform a process comprising:

updating, upon detecting a relationship between a first data item (X1) belonging to a first group (G1) and a second data item (Y1) belonging to a second group (G2), the coordinates of the first data item (X1) using the coordinates of the second group (G2) and the coordinates of the second data item (Y1) using the coordinates of the first group (G1) with reference to information about the coordinates associated with the plurality of data items and the coordinates associated with the plurality of groups; and

determining which data items are to belong to each of the first and second groups (G1, G2), based on the coordinates of data items (X1, X2, Y1, Y2) belonging to the first and second groups (G1, G2) and the coordinates of the first and second groups (G1, G2).

2. The computer program according to claim 1, wherein the updating includes updating the coordinates of the first data item and the coordinates of the second data item in such a way that a distance between the coordinates of the first data item (X1) and the coordinates of the second group (G2) and a distance between the coordinates of the second data item (Y1) and the coordinates of the first group (G1) become smaller.

3. The computer program according to claim 2, wherein, the determining includes determining which data items are to belong to each of the first and second groups (G1, G2) in such a way that a sum of a first sum of distances between the coordinates of individual data items that belong to the first group (G1) and the coordinates of the first group (G1) and a second sum of distances between the coordinates of individual data items that belong to the second group (G2) and the coordinates of the second group (G2) is minimum.

4. The computer program according to claim 2, wherein, the determining includes calculating, for each data item (X1, X2) belonging to the first group (G1), an inner product of a vector connecting the coordinates of the first group (G1) and the coordinates of the second group (G2) and a position vector of said each data item belonging to the first group (G1), calculating, for each data item (Y1, Y2) belonging to the second group (G2), an inner product of the vector and a position vector of said each data item belonging to the second group (G2), and determining which data items are to belong to each of the first and second groups (G1, G2) based on the calculated inner products.

5. The computer program according to any one of claims 1 to 4, wherein the process further includes updating, upon detecting a relationship between the first data item (X1) and a third data item belonging to the first group (G1), the coordinates of the first data item and the coordinates of the third data item using the coordinates of the first group (G1).

6. The computer program according to any one of claims 1 to 5, wherein:

the coordinates of a group are associated with a storage space for storing data items belonging to the group in a storage device; and

the process further includes determining a storage space for storing each data item in the storage device according to which group said each data item is to belong to.

7. The computer program according to claim 6, wherein, the process further includes receiving an access request for a data item, and when the data item is not stored in a cache corresponding to the storage device, obtaining all data items belonging to a group to which the data item belongs from the storage device, and storing the obtained data items in the cache.

8. The computer program according to any one of claims 1 to 7, wherein the relationship is that the first data item (X1) and the second data item (Y1) were accessed successively.

9. A data management apparatus for managing a plurality of data items (X1, X2, Y1, Y2) by grouping the plurality of data items (X1, X2, Y1, Y2) into a plurality of groups (G1, G2) and by giving coordinates to each of the plurality of data items (X1, X2, Y1, Y2) and each of the plurality of groups (G1, G2), the coordinates indicating relationships between the each of the plurality of data items and the each of the plurality of groups, the data management apparatus comprising:

storage means (1a) for storing information about the coordinates associated with the plurality of data items and the coordinates associated with the plurality of groups; and

operation means (1c) for updating, upon detecting a relationship between a first data item (X1) belonging to a first group (G1) and a second data item (Y1) belonging to a second group (G2), the coordinates of the first data item (X1) using the coordinates of the second group (G2) and the coordinates of the second data item (Y1) using the coordinates of the first group (G1) with reference to the information stored in the storage means (1a), and

determining which data items are to belong to each of the first and second groups (G1, G2), based on the coordinates of data items (X1, X2, Y1, Y2) belonging to the first and second groups (G1, G2) and the coordinates of the first and second groups (G1, G2).

10. A data management method, executed by a computer, for managing a plurality of data items (X1, X2, Y1, Y2) by grouping the plurality of data items (X1, X2, Y1, Y2) into a plurality of groups (G1, G2) and by giving coordinates to each of the plurality of data items (X1, X2, Y1, Y2) and each of the plurality of groups (G1, G2), the coordinates indicating relationships between the each of the plurality of data items and the each of the plurality of groups, the data management method comprising:

updating, upon detecting a relationship between a first data item (X1) belonging to a first group (G1) and a second data item (Y1) belonging to a second group (G2), the coordinates of the first data item (X1) using the coordinates of the second group (G2) and the coordinates of the second data item (Y1) using the coordinates of the first group (G1) with reference to information about the coordinates associated with the plurality of data items and the coordinates associated with the plurality of groups; and
determining which data items are to belong to each of the first and second groups (G1, G2), based on the coordinates of data items (X1, X2, Y1, Y2) belonging to the first and second groups (G1, G2) and the coordinates of the first and second groups (G1, G2).

FIG. 1

CLIENT

200

10

NETWORK

100

SERVER

# FIG. 2

**FIG. 3**

FIG. 4

FIG. 5

EP 2 858 031 A1

131

| SEGMENT MANAGEMENT TABLE | | |
|---|---|---|
| SEGMENT | COORDINATES | MEMBER DATA CHANGE |
| SG1 | ( 1 , 6 ) | NO |
| SG2 | ( 5 , 2 ) | NO |
| ... | ... | ... |

# FIG. 6

| DATA MANAGEMENT TABLE | 132 |
|---|---|
| DATA ITEM | COORDINATES |
| A | ( 3 , 6 ) |
| B | ( 6 , 3 ) |
| C | ( 4 , 3 ) |
| D | ( 4 , 1 ) |
| . . . | . . . |

FIG. 7

133

| MEMBERSHIP TABLE | |
|---|---|
| DATA ITEM | SEGMENT |
| A | SG1 |
| B | SG1 |
| C | SG2 |
| D | SG2 |
| ... | ... |

FIG. 8

FIG. 9

START

S11

RECEIVE ACCESS REQUEST

S12

DOES DATA ITEM EXIST IN CACHE? — Yes

No

S13

OBTAIN DATA ITEMS ON A SEGMENT BASIS FROM DATA STORAGE UNIT AND STORE THEM IN CACHE

S14

RETURN REQUESTED DATA ITEM

S15

HAS RELATIONSHIP BETWEEN DATA ITEMS BEEN DETECTED? — No

Yes

S16

DETERMINE WHICH DATA ITEMS ARE TO BELONG TO EACH SEGMENT

END

FIG. 10

START

┌─────────────────────────────────────────────┐ ⌐S21
│ OBTAIN COORDINATES OF DATA ITEMS WHOSE       │
│ RELATIONSHIP HAS BEEN DETECTED AND            │
│ COORDINATES OF SEGMENTS (ANALYSIS TARGET     │
│ SEGMENTS) TO WHICH DATA ITEMS BELONG         │
└─────────────────────────────────────────────┘

┌─────────────────────────────────────────────┐ ⌐S22
│ UPDATE COORDINATES OF DATA ITEMS WHOSE       │
│ RELATIONSHIP HAS BEEN DETECTED               │
└─────────────────────────────────────────────┘

┌─────────────────────────────────────────────┐ ⌐S23
│ OBTAIN COORDINATES OF ALL DATA ITEMS (ANALYSIS│
│ TARGET DATA ITEMS) BELONGING TO ANALYSIS     │
│ TARGET SEGMENTS                              │
└─────────────────────────────────────────────┘

┌─────────────────────────────────────────────┐ ⌐S24
│ DETERMINE GROUPING ON THE BASIS OF           │
│ COORDINATES OF ANALYSIS TARGET DATA ITEMS AND │
│ COORDINATES OF ANALYSIS TARGET SEGMENTS      │
└─────────────────────────────────────────────┘

┌─────────────────────────────────────────────┐ ⌐S25
│ UPDATE MEMBERSHIP TABLE                      │
└─────────────────────────────────────────────┘

┌─────────────────────────────────────────────┐ ⌐S26
│ REGISTER CHANGE OF DATA ITEMS WITH RESPECT TO │
│ SEGMENT WHOSE DATA ITEMS HAVE BEEN CHANGED   │
└─────────────────────────────────────────────┘

END

# FIG. 11

| DATA MANAGEMENT TABLE | |
|---|---|
| DATA ITEM | COORDINATES |
| A | ( 3.2 , 5.6 ) |
| B | ( 6 , 3 ) |
| C | ( 3.7 , 3.4 ) |
| D | ( 4 , 1 ) |

132a

F2

FIG. 12

| POSSIBLE GROUPING COMBINATIONS | | DS1 | DS2 | SUM OF DISTANCES DS=DS1+DS2 |
|---|---|---|---|---|
| SG1 | SG2 | | | |
| A, B | C, D | $d_{A1} + d_{B1}$ | $d_{C2} + d_{D2}$ | 11 |
| A, C | B, D | $d_{A1} + d_{C1}$ | $d_{B2} + d_{D2}$ | 8.8 |
| A, D | B, C | $d_{A1} + d_{D1}$ | $d_{B2} + d_{C2}$ | 11 |
| B, C | A, D | $d_{B1} + d_{C1}$ | $d_{A2} + d_{D2}$ | 15 |
| B, D | A, C | $d_{B1} + d_{D1}$ | $d_{A2} + d_{C2}$ | 18 |
| C, D | A, B | $d_{C1} + d_{D1}$ | $d_{A2} + d_{B2}$ | 15 |

134

| MEMBERSHIP TABLE | |
|---|---|
| DATA ITEM | SEGMENT |
| A | SG1 |
| B | SG2 |
| C | SG1 |
| D | SG2 |
| ... | ... |

133a

# FIG. 13

FIG. 14

START

S31

IS ANY STORAGE SPACE TO BE
RELEASED FROM CACHE?

No

Yes

S32

IS THERE CHANGE IN DATA ITEMS
BELONGING TO CORRESPONDING SEGMENT?

No

Yes

S33

UPDATE SEGMENT IN DATA STORAGE UNIT

S34

RELEASE STORAGE SPACE FROM CACHE

END

FIG. 15

F4

FIG. 16

FIG. 17

EP 2 858 031 A1

30 ACCESS HISTORY

B → D → B → D → B → A → C → A → C → A → B → D

ACCESS HISTORY FOR PARTIAL TIME PERIOD

B → A → B → D → C → D → B → A → B → A → C → A

31

FIG. 18

COMPREHENSIVE GROUPING

# FIG. 19A

LOCAL GROUPING

# FIG. 19B

START

OBTAIN COORDINATES OF DATA ITEMS WHOSE RELATIONSHIP HAS BEEN DETECTED AND COORDINATES OF SEGMENTS (ANALYSIS TARGET SEGMENTS) TO WHICH DATA ITEMS BELONG ⌐S21

UPDATE COORDINATES OF DATA ITEMS WHOSE RELATIONSHIP HAS BEEN DETECTED ⌐S22

OBTAIN COORDINATES OF ALL DATA ITEMS (ANALYSIS TARGET DATA ITEMS) BELONGING TO ANALYSIS TARGET SEGMENTS ⌐S23

CALCULATE, FOR EACH ANALYSIS TARGET DATA ITEM, INNER PRODUCT OF POSITION VECTOR OF ANALYSIS TARGET DATA ITEM AND VECTOR CONNECTING COORDINATES OF ANALYSIS TARGET SEGMENTS ⌐S24a

SORT INNER PRODUCTS AND DETERMINE GROUPING ⌐S24b

UPDATE MEMBERSHIP TABLE ⌐S25

REGISTER CHANGE OF DATA ITEMS WITH RESPECT TO SEGMENT WHOSE DATA ITEMS HAVE BEEN CHANGED ⌐S26

END

FIG. 20

FIG. 21

EXAMPLE OF SORTING INNER PRODUCTS

BELONG TO SG1

A  −9.6

C  1.2

SG1 → SG2

B  12

D  12

BELONG TO SG2

# FIG. 22

132b

| DATA MANAGEMENT TABLE | | |
|---|---|---|
| DATA ITEM | COORDINATES | RELATIONSHIP |
| A | ( 3 , 6 ) | C |
| B | ( 6 , 3 ) | D |
| C | ( 4 , 3 ) | A |
| D | ( 4 , 1 ) | B |
| . . . | . . . | . . . |

# FIG. 23

START

RECEIVE ACCESS REQUEST — S11

DOES DATA ITEM EXIST IN CACHE? — S12
Yes
No

OBTAIN DATA ITEMS ON A SEGMENT BASIS FROM DATA STORAGE UNIT AND STORE THEM IN CACHE — S13

RETURN REQUESTED DATA ITEM — S14

HAS RELATIONSHIP BETWEEN DATA ITEMS BEEN DETECTED? — S15a
No
Yes

WAS RELATIONSHIP DETECTED SPECIFIED NUMBER OF TIMES AFTER LAST DETERMINATION ABOUT WHICH DATA ITEMS ARE TO BELONG TO EACH SEGMENT? — S15b
No
Yes

DETERMINE WHICH DATA ITEMS ARE TO BELONG TO EACH SEGMENT — S16

END

# FIG. 24

132c

| DATA MANAGEMENT TABLE | | |
|---|---|---|
| DATA ITEM | COORDINATES | RELATIONSHIP |
| A | ( 3.2 , 5.6 ) | — |
| B | ( 5.9 , 2.9 ) | — |
| C | ( 3.7 , 3.4 ) | — |
| D | ( 3.7 , 1.5 ) | — |
| . . . | . . . | . . . |

## FIG. 25A

133b

| MEMBERSHIP TABLE | |
|---|---|
| DATA ITEM | SEGMENT |
| A | SG1 |
| B | SG2 |
| C | SG1 |
| D | SG2 |
| . . . | . . . |

## FIG. 25B

FIG. 26

CLIENT
200

10
NETWORK

100   100a   100b
SERVER   SERVER   SERVER

FIG. 27

135

| SEGMENT LOCATION TABLE | |
|---|---|
| SEGMENT | HANDLING SERVER |
| SG1 | SERVER 100 |
| SG2 | SERVER 100a |
| SG3 | SERVER 100b |
| ... | ... |

# FIG. 28

Europäisches
Patentamt

European
Patent Office

Office européen
des brevets

# EUROPEAN SEARCH REPORT

Application Number

EP 14 18 7446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 745 256 A1 (PHILIPS ELECTRONICS NV [NL] KONINKL PHILIPS ELECTRONICS NV [NL]) 4 December 1996 (1996-12-04) | 9,10 | INV. G06T1/60 |
| A | * paragraph [0001] - paragraph [0013] * * paragraph [0019] - paragraph [0054] * ----- | 1-8 | |
| A | US 6 130 678 A (AUGER DOMINIQUE [FR] ET AL) 10 October 2000 (2000-10-10) * column 2, line 54 - column 4, line 53 * ----- | 9,10 | |

TECHNICAL FIELDS
SEARCHED      (IPC)

G06T
G06F

The present search report has been drawn up for all claims

| Place of search | Date of completion of the search | Examiner |
|---|---|---|
| The Hague | 19 February 2015 | Filip, Liviu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 18 7446

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2015

| Patent document cited in search report | | Publication date | Patent family member(s) | | Publication date |
|---|---|---|---|---|---|
| EP 0745256 | A1 | 04-12-1996 | DE | 69516674 D1 | 08-06-2000 |
| | | | DE | 69516674 T2 | 28-12-2000 |
| | | | EP | 0745256 A1 | 04-12-1996 |
| | | | JP | 3789132 B2 | 21-06-2006 |
| | | | JP | H09510037 A | 07-10-1997 |
| | | | US | 5809565 A | 15-09-1998 |
| | | | WO | 9619809 A2 | 27-06-1996 |
| US 6130678 | A | 10-10-2000 | CN | 1157975 A | 27-08-1997 |
| | | | DE | 69615803 D1 | 15-11-2001 |
| | | | DE | 69615803 T2 | 25-04-2002 |
| | | | EP | 0780796 A1 | 25-06-1997 |
| | | | FR | 2742899 A1 | 27-06-1997 |
| | | | IL | 119829 A | 16-07-2000 |
| | | | JP | H09274442 A | 21-10-1997 |
| | | | US | 6130678 A | 10-10-2000 |
| | | | ZA | 9610454 A | 24-06-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8095962 A

- JP 2009003888 A